# EUROPEAN PATENT SPECIFICATION

(11) **EP 1 697 836 B1**
(45) Date of publication and mention of the grant of the patent: **18.06.2014**
(21) Application number: 04714696.4
(22) Date of filing: 26.02.2004
(51) Int. Cl.: G06F 9/445

(54) **MOBILE DEVICE PROGRAMMING SYSTEM AND METHOD**
SYSTEM UND VERFAHREN ZUR AKTUALISIERUNG EINER MOBILEN EINRICHTUNG
SYSTEME ET PROCEDE DE PROGRAMMATION DE DISPOSITIF MOBILE

(30) Priority: 08.12.2003 US 527952 P
(43) Date of publication of application: 06.09.2006
(73) Proprietor: BlackBerry Limited, Waterloo, ON N2K 0A7 (CA)
(72) Inventor: CLARK, David, R., Kitchener, Ontario N2C 2L1 (CA); MARION, Nathan, Raleigh, NC 27613 (US)
(74) Representative: MERH-IP Matias Erny Reichl Hoffmann
(86) International application number: PCT/CA2004/000283
(87) International publication number: WO 2005/055053

(56) References cited:
- EP-A- 0 841 615
- WO-A-02/41147
- US-A- 6 151 708
- US-A1- 2002 138 545
- US-A1- 2003 046 676

## Description

### Technical Field

This application relates to over-the-air (OTA) programming or updating of software and/or firmware in mobile communication devices.

### Background Art

A mobile communication device, such as a cellular phone or wireless Internet appliance, may be programmed or updated over a wireless communication network.

Update data, such as a software patch to a mobile device program, a virus protection file or an update to existing virus protection software on the mobile device, or a new program not currently loaded on the mobile device, is typically transmitted over a wireless communication network and received by the mobile device. Upon receiving the update data, the mobile device attempts to update its associated software or firmware with the update data. If the mobile device is able to receive the update data and the update operation is successful, then the mobile device operates normally.

If the update operation is unsuccessful, however, then the mobile device may not operate properly. An update may be unsuccessful for a variety of reasons. First, the mobile device may not have adequate update resources, such as available memory, to receive the update data and perform the update. The mobile device may thus not receive the update data. If the update data included a software patch to fix a software error, then the mobile device may continue to operate subject to the software error. The user of the mobile device may thus be forced to choose between deleting information stored in the mobile device memory to make available mobile device memory to receive the update data and perform the update, or continuing operation of the mobile device subject to the existing software or firmware errors.

Second, the update data may be corrupted during the transmission over the communication network, and the mobile device software or firmware may thereafter be corrupted after the mobile device attempts to update its software or firmware, severely limiting the operation of the mobile device, or even rendering the mobile device inoperable. The user may then be unable to revert back to the original mobile device configuration due to the corrupted software or firmware.

Third, even if the mobile device is updated successfully, the user may have additional software loaded on the mobile device, such as software provided by a third party, which may be incompatible with the update. Alternatively, the update may provide software or firmware enhancements that the user does not desire. In such a situation, the user may not be able to readily revert back to the original mobile device configuration.

Document US 2003/046676 A1 discloses a system and a method for automatic software updates, wherein a client application periodically connects to an update database containing information on available updates for all programs installed on the client computer. An application that runs on the client computer determines which software products installed on the client computer need to be updated and initiates the transfer of update data for the relevant programs. A recovery module is provided which monitors all changes performed during the update and archives each file that was deleted or modified during the update. If a user is dissatisfied with the update, he or she can choose to revert back to the non-updated version.

Document WO 02/41147 A1 discloses a system and a method for updating a mobile device, wherein a central server distributes update data over a communication network to a mobile device. The server may send a manifest describing the update data characteristics so that the mobile device can determine if it has enough memory space to receive and unpack the update data. If there is not enough memory space available, the mobile device may free up additional memory space by compressing other files stored in its memory or by transferring files to the central server for temporary storage until the update has been completed.

### Disclosure of the Invention

A method and a system for updating a mobile device as set out in claims 1-33.

### Brief Description of the Drawings

Fig. 1 is a block diagram of a system for programming a mobile device over a communication network;
Fig. 2 is a flow chart illustrating a process of evaluating a mobile device update in an allocated update resource in the mobile device;
Fig. 3 is a flow chart illustrating a process for updating a mobile device in an update management system;
Fig. 4 is a flow chart illustrating a process of allocating update resources in a mobile device;
Fig. 5 is a flow chart illustrating a process of determining whether a pending updated mobile device configuration is to be evaluated or accepted during a mobile device initialization;
Fig. 6 is a functional diagram of another embodiment of a system for programming a mobile device over a communication network; and
Fig. 7 is a block diagram of an exemplary mobile communication device.

### Best Mode for Carrying Out the Invention

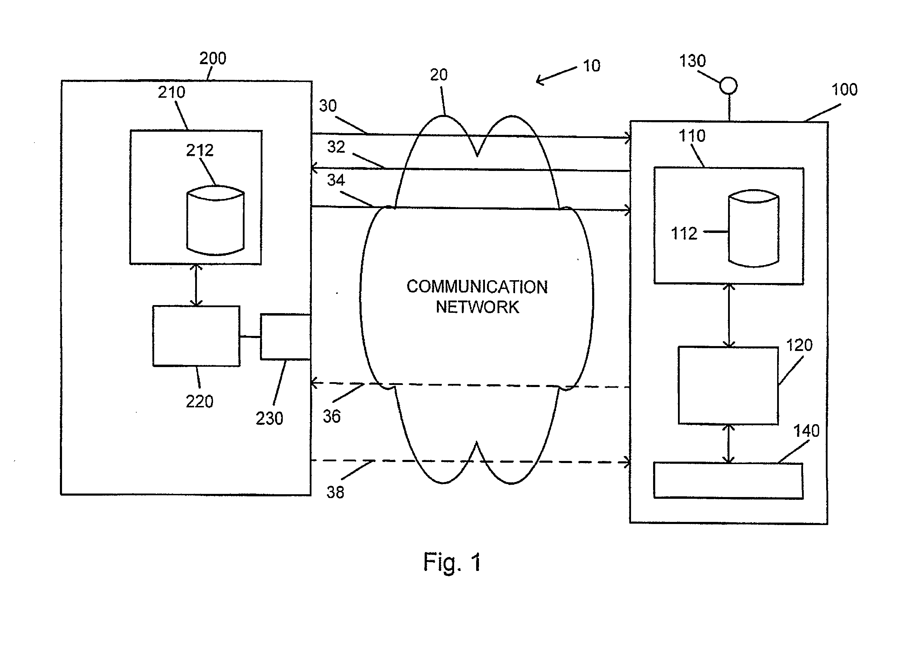

Fig. 1 is a block diagram of a system 10 for programming a mobile device 100 over a communication network 20. The system 10 includes an update server 200 operable to send data to and receive data from the mobile device 100 over the communication network 20.

The mobile device 100 may be a computing device operable to send and receive data over the communication network 20. Exemplary mobile devices include cellular telephones, pagers, wireless enabled personal digital assistants (PDA's), and other such voice and data communication devices. The mobile device 100 comprises a memory subsystem 110, a processing subsystem 120, a communication subsystem 130, and an input/output subsystem 140. The processing subsystem 120 is coupled to the memory subsystem 110 and the communication subsystem 130, and is operable to store and retrieve data in the memory subsystem 120 and execute instructions stored in the memory subsystem 120, and to cause the communication subsystem 130 to transmit and receive data over the communication network 20. The memory subsystem 110 may store mobile device data 112 associated with one or more programs or software executed on the processing subsystem 120. One such exemplary mobile device 100 may be of the type disclosed in U. S. Pat. No. 6,278, 442, entitled "HANDHELD ELECTRONIC DEVICE WITH A KEYBOARD OPTIMIZED FOR USE WITH THE THUMBS".

The communication network 20 over which the mobile device 100 communicates may be a wireless communication network, such as a cellular network or satellite based communication network, or may be a combination of wire/fiber based networks and wireless networks, such as the Internet and a cellular network in communication with the Internet over a wireless gateway. The mobile device 100 may be able to receive voice communications and/or data communications over the communication network 20. For example, the mobile device 100 may comprise a mobile station operable to receive redirected e-mail messages over a wireless network. One such exemplary mobile device redirector system may be of the type disclosed in U. S. Pat. No. 6,219, 694, entitled "SYSTEM AND METHOD FOR PUSHING INFORMATION FROM A HOST SYSTEM TO A MOBILE DATA COMMUNICATION DEVICE HAVING A SHARED ELECTRONIC ADDRESS".

The update server 200 comprises a memory subsystem 210, a processing subsystem 220, and a communication subsystem 230. The processing subsystem 220 is coupled to the memory subsystem 210 and the communication subsystem 230, and is operable to store and retrieve data in the memory subsystem 220 and execute instructions stored in the memory subsystem 220, and to cause the communication subsystem 230 to transmit and receive data over the communication network 20. The memory subsystem 210 may store update data 212 associated with one or more updates for the mobile device 100. The update server 200 may comprise a single server computer, or may be a distributed computing system distributed over a network, such as several computers distributed over a local area network (LAN).

The update data 212 may comprise data related to one or more mobile device configuration updates, such as an operating system software update, an application software update, a firmware update for one or more mobile device subsystems, or even a data file update, such as a data file for a virus protection program. Other mobile device configuration updates may also be accommodated by the update data 212. The update data 212 may be in the form of a self-executing software patch or self-extracting file, or may be an executable program that requires a user command to perform an update to the mobile device configuration. Processing the update data 212 at the mobile device 100 updates the mobile device 100 from a baseline configuration to an updated configuration.

In operation, the update server 200 sends an update notification to the mobile device 100. Alternatively, the mobile device 100 may periodically poll the update server 200 to determine if the current mobile device configuration has a pending update, and the update server 200 may then send the update notification to the mobile device 100.

If an update for the current mobile device configuration is available, the update server 200 transmits resource requirements data to the mobile device 200, as shown by transmission 30. The resource requirements data may be transinitted as part of the update notification if the update server 200 is configured to automatically provide updates to the mobile device 100 as the updates become available, or may alternatively be provided in response to the periodic poll of the update server 200 by the mobile device 100.

The resource requirements data specifies the minimum update resources to be associated with the mobile device 100 for the update to be performed. The resource requirements typically specify a minimum amount of available memory in the memory subsystem 110 of the mobile device 100. For example, if the update data comprises a 64 KB compressed file that will extract to 100 KB when decompressed, then the memory subsystem 110 must have 100 KB of available memory. Additionally, if the update further requires an additional 50 KB of memory for various update operations, such as data swapping, then the resource requirements will specify that the mobile device 100 must have 150 KB of available memory in the memory subsystem 110. Other resource requirements may also be specified, such as a minimum mobile device configuration (e.g., a minimum operating system level), a minimum amount of computational resources (e.g., a minimum processing capability), and the like.

Upon receiving the resource requirements data, the mobile device 100 will determine whether it has associated resources to meet the specified resource requirements. If the mobile device 100 does not have associated resources to meet the specified resource requirements, then the mobile device 100 will obtain the necessary resources. The necessary resources may be obtained solely by the mobile device 100, or by the mobile device 100 in cooperation with another processing system, such as the update server 200. For example, if a resource requirement specifies a minimum amount of available memory, then the necessary resources may be obtained by deleting or purging data stored in the mobile device memory subsystem 110 to make available the required amount of available memory. Alternatively, the data identified to be purged may be transmitted to the update server 200, or some other storage device for temporary storage, and then deleted from the memory subsystem 110 of the mobile device 100 to make available the required amount of available memory. After the update is completed, the stored data is then transmitted back to the mobile device 100 and stored in the memory subsystem 110.

After obtaining the update resources, the mobile device 100 will transmit to the update server 200 an update request to request that the update data 212 be transmitted to the mobile device 100, as shown by transmission 32. In response to the update request, the update server 200 will transmit the update data 212 to the mobile device 100, as shown by transmission 34. Upon receiving the update data 212, the mobile device 100 will process the update data 212 and create an updated mobile device configuration.

After the updated mobile device configuration is created, the user of the mobile device 100 may accept the update, or revert back to the original baseline mobile device configuration. In one embodiment, all modifications to the mobile device 100 in the updated mobile device configuration are stored in a specified update resource. For example, if 150 KB of available memory is required for an update, then 150 KB of memory in the mobile device 100 is made available. All modifications to the baseline mobile device configuration are made within the specified available memory while the baseline mobile device configuration remains unchanged in the remaining memory. Thus, after an update is made to the baseline mobile device configuration, the mobile device 100 has two selectable configurations - the original baseline configuration, and the updated mobile device configuration.

The user of the mobile device 100 may then test the mobile device 100 using the updated configuration and choose to accept the updated configuration or revert back to the baseline configuration. If the user chooses to select the updated configuration, then the baseline configuration of the mobile device 100 is set to the updated configuration. In one embodiment, data in the allocated update memory are copied over data in the remaining mobile device memory 110, and the allocated update memory is then deallocated. In another embodiment, corresponding data in the remaining mobile device memory 110 is purged and the updated data in the allocated memory is referenced in place of the purged corresponding data. Any mobile device data stored in an external storage device, such as the update server 200, is then transmitted back to the mobile device 100 and stored in the memory subsystem 110. Other methods of setting the baseline configuration of the mobile device 100 to the updated configuration may also be used.

If the user of the mobile device 100 chooses to revert back to the baseline configuration, then the allocated memory is deallocated. Any mobile device data stored in an external storage device, such as the update server 200, is then transmitted back to the mobile device 100 and stored in the memory subsystem 110.

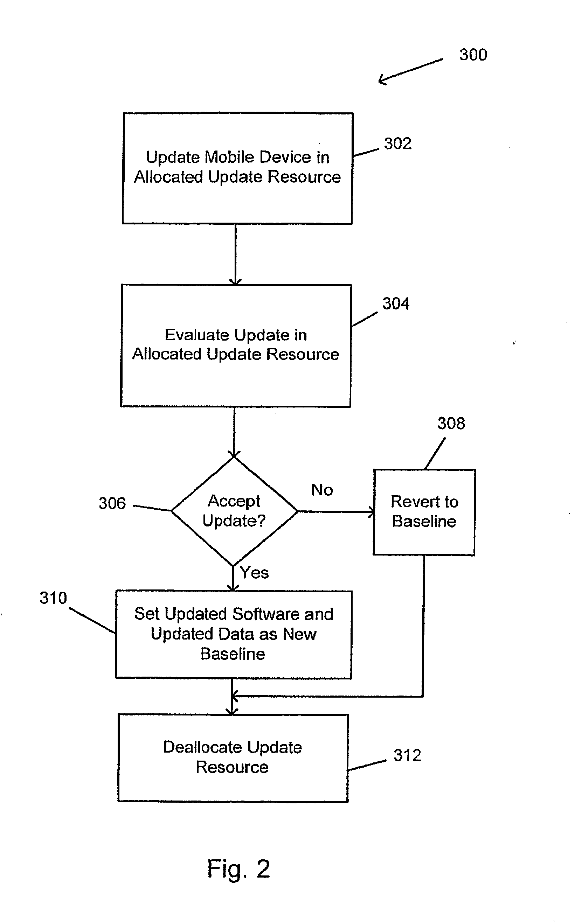

Fig. 2 is a flow chart 300 illustrating a process of evaluating a mobile device update in an allocated update resource in the mobile device 100. As described above, an allocated update resource may comprise a portion of the mobile device memory subsystem 110. In step 302, the mobile device 100 is updated in the allocated update resource. For example, all changes to a baseline mobile device configuration may be limited to the memory of the mobile device allocated for the update process. Thus, after execution of step 302, the mobile device 100 has two selectable configurations - the original baseline configuration, and the updated mobile device configuration. Because all changes to the baseline configuration are contained within the memory of the mobile device 100 allocated for the update process, the baseline configuration of the mobile device 100 is unchanged. Retention of the baseline configuration facilitates a reversion to the baseline configuration with minimum processing steps, as described below.

In step 304, the mobile device 100 is evaluated in the allocated update resource. For example, the mobile device 100 may temporarily execute in the updated mobile device configuration, the data of which is stored in the memory allocated for the update process. Thus, if a mobile device application data file is updated, then the mobile device 100 executes the application and references the updated data file stored in the memory allocated for the update process. During the evaluation, the original data file is still stored in the mobile device 100 memory subsystem 110, but is not accessed.

Likewise, if a mobile device application is updated, then the mobile device 100 executes the updated application stored in the memory allocated for the update process. During the evaluation, the original application is still stored in the mobile device 100 memory subsystem 110, but is not accessed. Data that are manipulated by the updated application may be copied into the memory allocated for the update process prior to execution of the updated application. Alternatively, in another embodiment, the data that are manipulated during the update may be copied into the memory allocated for the update process as needed, according to a "copy-on-write" technique. The copy-on-write technique involves copying only data that are updated as the data are updated, and retaining references to unchanged data, where possible. This allows a very efficient use of memory resources when updating data or data files.

In step 306, the user chooses whether to accept the update. If the user chooses not to accept the update, then in step 308 the mobile device 100 reverts to the baseline configuration. The mobile device 100 may revert to the baseline configuration by clearing the memory allocated for the update process, or by any other method by which the baseline configuration may be restored.

If the user chooses to accept the update, however, then in step 310 the mobile device 100 sets the updated configuration as the new baseline configuration. In one embodiment, data in the allocated update memory are copied over data in the remaining mobile device memory 110. In another embodiment, corresponding data in the remaining mobile device memory 110 is purged and the updated data in the allocated memory is referenced. Other methods by which the baseline configuration of the mobile device 100 may be set to the updated configuration may also be used.

In step 312, allocated update resources are deallocated. This step may include purging data from the memory allocated for the update process in the mobile device 100 and enabling normal read and write operations to the memory. Additionally, if data were transferred from the mobile device 100 to an external storage device, step 312 may also include requesting and receiving the stored data from the external storage device and storing the data in the memory subsystem 110 of the mobile device 100.

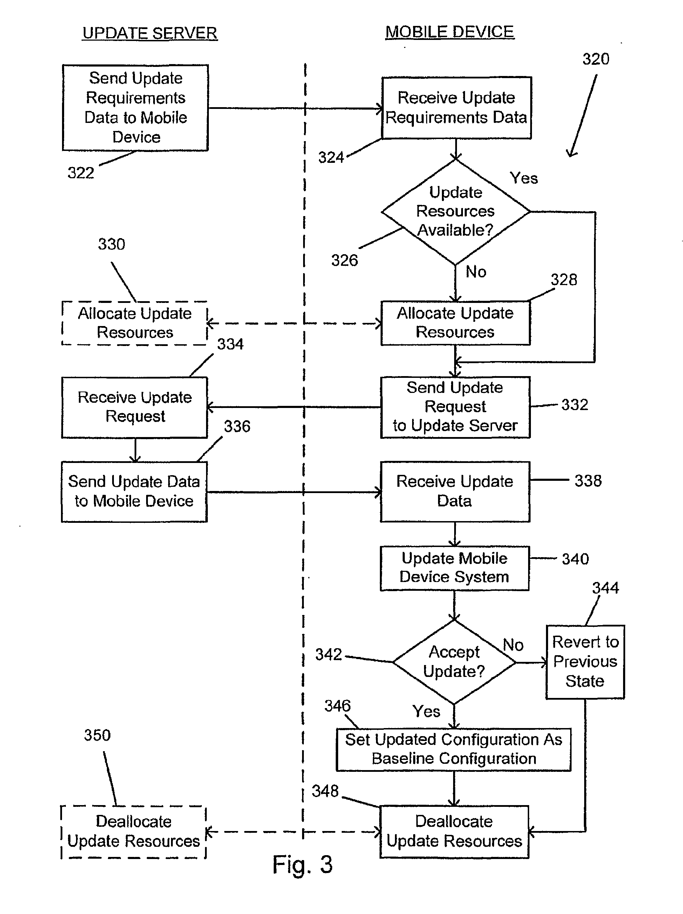

Fig. 3 is a flow chart 320 illustrating a process for updating a mobile device 100 in an update management system. The update management system may comprise the mobile device 100 and the update server 200. In another embodiment, the update server 200 may comprise a plurality of computing devices in communication with the mobile device 100. Each of the plurality of computing devices may have allocated update functions that are performed at one or more occurrences during the update process.

In step 322, the update server sends update requirements data to the mobile device 100. The update requirements data may be sent to the mobile device 100 as part of a scheduled update notification to the mobile device 100, or in response to a periodic poll from the mobile device 100, or in response to some other condition that, when met, results in the update server 200 sending the update requirements data to the mobile device 100. The update requirements data typically specifies one or more update resource requirements, such as a memory requirement, processing requirement, or some other requirement. For example, a memory requirement may specify a minimum amount of memory to execute an update process on the mobile device 100. A processing requirement may specify a minimum amount of processing capability to execute the update process. Other requirements may include a minimum communication requirement, such as a bandwidth requirement for data swapping during execution of the update process.

In step 324, the mobile device 100 receives the update requirements data, and in step 326 determines whether update resources are available at the mobile device 100. If one or more update resources are not available, then in step 328 the mobile device 100 allocates the required update resources. The resources may be allocated solely by the mobile device 100, or by the mobile device 100 in cooperation with another processing system, such as the update server 200, as indicated by step 330. For example, if a resource requirement specifies a minimum amount of available memory, then the necessary resources may be obtained by deleting or purging data stored in the mobile device memory subsystem 110 to make available the required amount of available memory. If the purged data is stored in another storage system in communication with the mobile device 100, such as a contact database stored on a mail server, then the stored data may be downloaded to the mobile device 100 after the update process is complete.

Alternatively, the data to be purged to make available the required amount of available memory may be transmitted to the update server 200, or some other storage device, for temporary storage, and then purged from the memory subsystem 110 of the mobile device 100 to make available the required amount of available memory.

Likewise, if the resource requirement specifies a minimum processing capability and the mobile device 100 does not meet the minimum processing capability, or if the resource requirement specifies that the update server 200 is to perform update operations on stored mobile device data, then data stored in the memory subsystem 110 of the mobile device 100 may be transmitted to the update server 200. Thus, if a mobile device update requires processor intensive operations, such as re-indexing a stored database, the processor intensive operations may be performed by update server 200, which typically has much more processing capability than the mobile device 100.

Once the resource requirements are obtained, or if the mobile device 100 already has the necessary resource requirements, then in step 332 the mobile device 100 sends an update data request to the update server 200. In step 334, the update server 200 receives the update data request, and in response sends the update data to the mobile device in step 336.

The update data may comprise data related to one or more mobile device configuration updates, such as an operating system software update, an application software update, a firmware update for one or more mobile device subsystems, or even a data file update, such as a data file for a virus protection program. Other mobile device configuration updates may also be accommodated by the update data. The update data may be in the form of a self-executing software patch or self-extracting file, or may be an executable program that requires a user command to perform an update to the mobile device configuration.

The mobile device 100 receives the update data in step 338, and in step 340 the mobile device 100 is updated. In step 342, the user of the mobile device 100 determines whether to accept the update. If the user chooses not to accept the update, then in step 344 the mobile device 100 reverts to the baseline configuration. If the user chooses to accept the update, however, then in step 346 the mobile device 100 sets the updated configuration as the new baseline configuration. In step 348, the update resources are deallocated. Likewise, any allocated update resources in the update server are also deallocated in step 350. Step 350 typically includes sending stored mobile device data or updated mobile device data back to the mobile device 100 for storage in the mobile device memory subsystem 110.

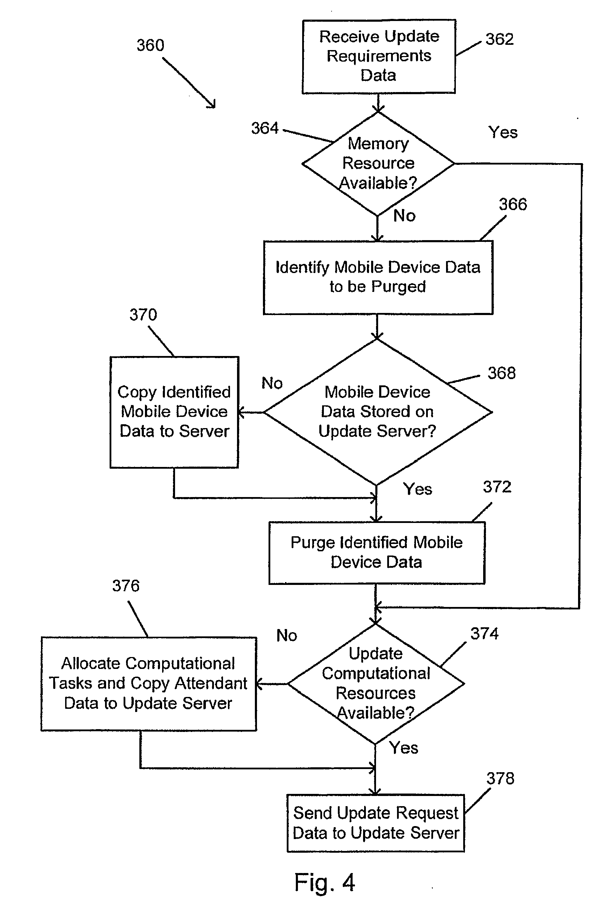

Fig. 4 is a flow chart 360 illustrating a process of allocating update resources in a mobile device 100. Update resources are allocated in response to update requirements data that specifies one or more update resource requirements, such as a memory requirement, processing requirement, or some other requirement. In the flow chart 360 of Fig. 4, the update requirements data specifies a memory resource and a computational resource.

In step 362, the update requirements data are received by the mobile device 100. In step 364, the mobile device 100 determines whether it has a minimum amount of memory available to meet the specified memory requirement. If the mobile device 100 determines that it does not have the minimum amount of memory available to meet the specified memory requirement, then in step 366 it identifies mobile device data stored in the memory subsystem 110 to be purged to make available the specified minimum amount of memory.

In step 368, the mobile device 100 determines if the identified mobile device data to be purged is stored on the update server 200. If the identified mobile device data to be purged is not stored on the update server 200, then the mobile device 100 may transmit the identified mobile device data to be purged to the update server 200, as shown in step 370. In step 372, the identified mobile device data is purged, making available at least the minimum amount of memory to meet the specified memory requirement.

In another embodiment, the mobile device 100 may determine whether the identified mobile device data to be purged is stored on some other external storage device. For example, if the identified data to be purged is a collection of e-mail messages, then the mobile device may determine whether the e-mail messages are stored on an associated mail server. If so, then the e-mail messages may be purged without sending the e-mail messages to the update server 200 or the mail server. Instead, after the update process is complete, the purged e-mail messages may be downloaded to the mobile device 100 from the mail server.

Alternatively, the purged data need not be replaced if the mobile device 100 can operate without such data. For example, if a collection of e-mail messages is purged, then the e-mail messages need not be replaced after the update process.

In step 374, the mobile device 100 determines whether it has a minimum amount of update computational resources available to meet the specified memory requirement. A computational resource may be included as an update resource requirement so as to minimize the amount of time required to perform the update at the mobile device 100. The computational resources may specify a processor type, update computational requirements, or some other resource type. For example, a computational resource may specify a minimum processor speed or minimum processor instruction set size.

Alternatively, the computational resource may specify a maximum file alteration size, e.g., a maximum size of a database file that may be re-indexed at the mobile device 100 as a result of an update. Thus, if a database file stored on the mobile device 100 that is to be updated exceeds the maximum specified size, the database may be transmitted to the update server 200, which may have additional computational resources and thus re-index the database file relatively quickly as compared to the mobile device 100. The updated data are then transmitted back to the mobile device 100 after the update is performed.

In another embodiment, the update requirements may specify that particular data files or applications to be updated be transmitted to the update server 200. For example, if it would be more efficient to update a particular data file at the update server 200, then the particular data file is transmitted to the update server 200.

If the mobile device 100 does not have the specified computational resource, then corresponding computational tasks are allocated to the update server 200, and attendant data are sent to the update server 200 to be updated, as shown in step 376.

Having obtained the necessary update resource requirements, the mobile device 100 sends update request data to the update server 200, as shown in step 378. Upon receiving the update request data, the update server 200 sends update data to the mobile device 200, and/or performs any associated computational tasks allocated in step 376.

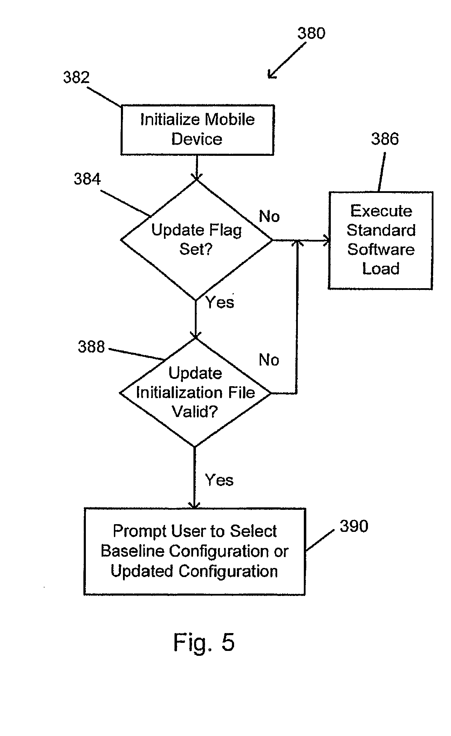

After the update is performed, updated data in the mobile device 100 are stored in the memory allocated for the update process. The user of the mobile device 100 may accept the update, or revert back to the baseline configuration of the mobile device 100, as described with reference to Fig. 3 above. If the update data are corrupted during the transmission over the communication network 20, however, then the mobile device 100 software or firmware may thereafter be corrupted after the mobile device 100 attempts to update its software or firmware. Such corruption may render the mobile device 100 inoperable, and the user may then be unable to revert back to the original mobile device configuration when restarting the mobile device 100. To prevent such a condition, an update initialization file indicating a pending update may be stored on the mobile device 100 as part of the update process. Fig. 5 provides a flow chart 380 illustrating a process of determining whether a pending updated mobile device configuration is to be evaluated or accepted during an initialization of a mobile device 100.

In step 382, the mobile device 100 is initialized. The mobile device 100 may be initialized as part of a normal power-on or restart procedure. In step 384, the mobile device 100 determines during the initialization whether an update flag is set. If an update flag is not set, then a standard software load is executed in step 386. A standard software load typically includes initializing the mobile device 100 according to a baseline configuration.

If an update flag is set, however, then an update initialization file is checked to determine whether valid update data is specified in the file. Such valid update data may include an identification of a baseline mobile device configuration and an updated mobile device configuration. If an update initialization file does not exist, or is corrupted, then a standard software load is executed in step 386.

If an update initialization file does exist and is valid, however, then the user is prompted to select the baseline configuration of the mobile device 100 or the updated configuration of the mobile device 100, as shown in step 390. The mobile device 100 is then loaded according to the selected configuration, and the baseline configuration of the mobile device 100 is set to the selected configuration. In another embodiment, however, the user may again test the updated mobile device configuration before selecting one of the baseline configurations or the updated configuration.

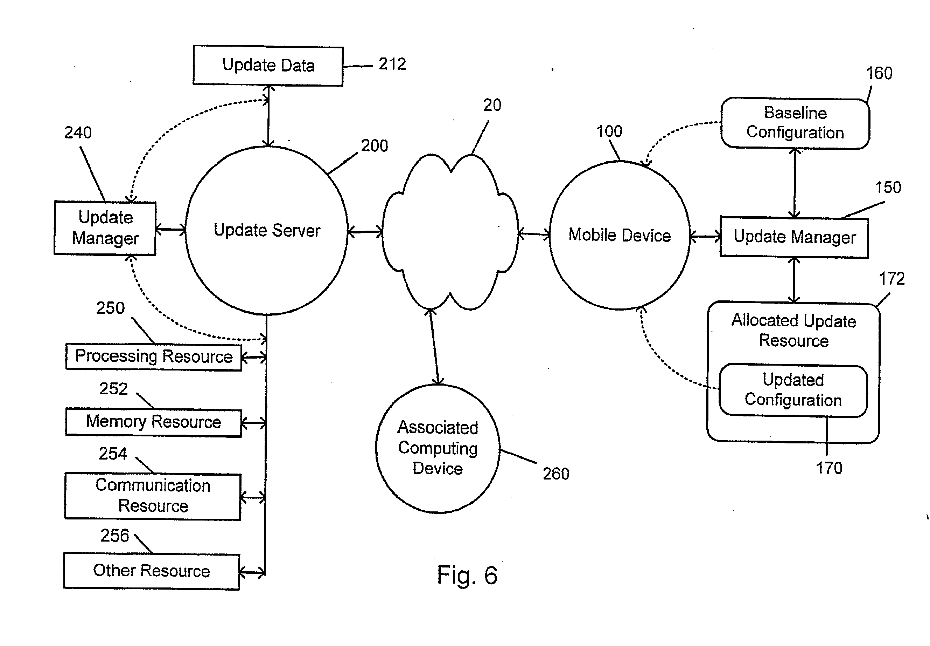

Fig. 6 is a functional diagram of another embodiment of a system for programming a mobile device 100 over a communication network 20. The structures to perform the associated functions comprise the mobile device 100 including update manager programming 150, and an update server 200 including update manager programming 240. Each update manager program 150 and 240 comprises instructions executable by the processing subsystems of the mobile device 100 and the update server 200. The instructions are operable to cause the mobile device 100 and the update server 200 to perform some or all of the functions, steps and processes described with respect to Figs. 1-5, and are stored in a computer readable medium accessible by either the mobile device 100 or update server 200. The update managers 150 and 240 may be implemented as stand-alone programs, or may be embedded instructions in application software or system software running on the mobile device 100 and the update server 200.

The update manager 150 comprises instructions that, when executed, manage the update process for updating the mobile device 100 at the mobile device 100. For example, the update manager 150 may comprise instructions to send and receive the update data messages described with reference to Figs. 1-6 above, and to maintain the baseline configuration 160 of the mobile device 100 while also maintaining the updated configuration 170 in the allocated update resource 172. Additionally, the update manager 150 may also manage the reversion back to the baseline configuration 160 or the acceptance of the updated configuration 170.

Likewise, the update manager 240 comprises instructions that, when executed, manage the update process for updating the mobile device 100 at the update server 200. For example, the update manager 240 may comprise instructions to send and receive the update data messages described with reference to Figs. 1-6 above, and to manage the allocation of various update resources, such as processing resources 250, memory resources 252, communication resources 254, or other resources 256.

Additionally, the update managers 150 and 240 may also manage the allocation of update resources with an associated computing device 260. For example, if the associated computing device 260 is a mail server, then the update manager 150 may upload any contacts that are stored on the mobile device 100 and not stored on the mail server 260 before the update process. Similarly, the associated computing device 260 may be used as an additional processing resource. For example, either of the update managers 150 or 240 may instruct the associated computing device 260 to perform computations on mobile device data to create updated data that is then provided to the mobile device 100 for storage. By way of another example, if the associated computing device 260 is a server maintained by a third party software vendor, then the update manager 240 may utilize the high bandwidth connection of the update server 200 as a communication resource 254 to communicate with the associated computing device 260 to obtain update data 212 or to have the associated computing device 260 perform one or more proprietary processes on mobile device data to be updated. The update data 212 or updated mobile device data are then provided to the mobile device 100.

The systems and methods described in this application may also be adapted for use in updating computing devices over other communication networks. For example, the update management system of Figs. 1-6 may also be adapted for updating a client computer in communication with the update server 200 over a communication network such as the Internet, a LAN, a WAN, or other such communication networks. Thus, if the associated computing device 260 is a redirector computing device 260 that is operable to redirect e-mail messages sent to a mail server to the mobile device 100, then the update server 200 may also update the redirector computing device 260 in a similar manner as described with respect to the mobile device 100.

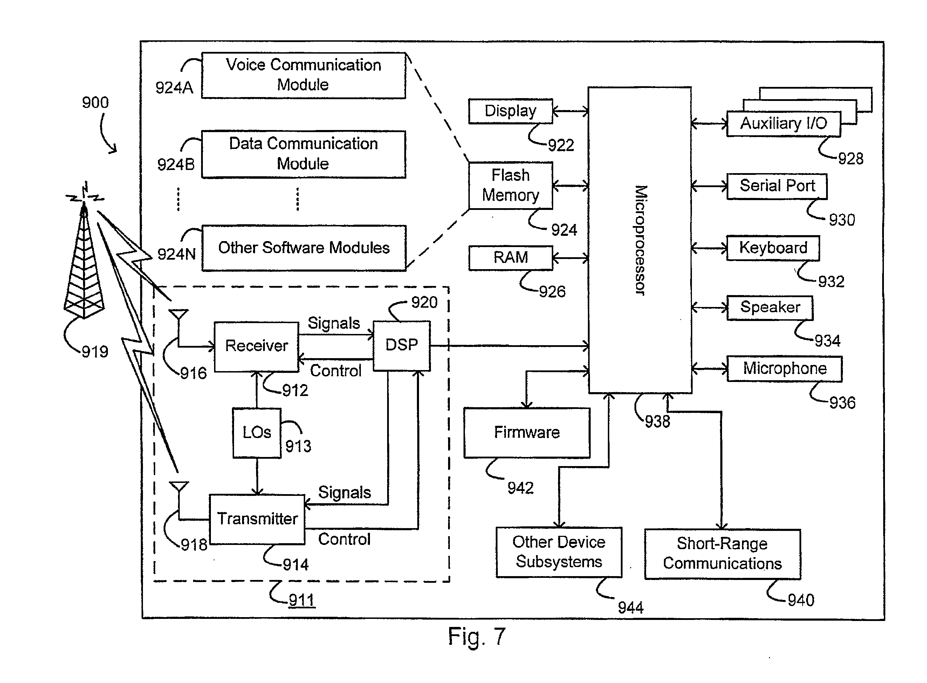

Fig. 7 is a block diagram of an exemplary mobile communication device 900 in which the systems and methods disclosed herein may be implemented. The wireless device 900 is preferably a two-way communication device having voice and/or data communication capabilities. The voice communications may be implemented over either an analog or digital voice communication channel. The device preferably has the capability to communicate with other computer systems on the Internet. Depending on the functionality provided by the device, the device may be referred to as a data messaging device, a two-way pager, a cellular telephone with data messaging capabilities, a wireless Internet appliance or a data communication device (with or without telephony capabilities).

Where the device 900 is enabled for two-way communications, the device will incorporate a communication subsystem 911, including a receiver 912, a transmitter 914, and associated components such as one or more, preferably embedded or internal, antenna elements 916 and 918, local oscillators (LOs) 913, and a processing module such as a digital signal processor (DSP) 920. The particular design of the communication subsystem 911 will be dependent upon the communication network in which the device is intended to operate. For example, a device 900 may include a communication subsystem 911 designed to operate within a Mobitex mobile communication system, a DataTAC mobile communication system, or a General Packet Radio Service (GPRS) communication subsystem 911.

Network access requirements will also vary depending upon the type of network 919. For example, in the Mobitex and DataTAC networks, mobile devices such as 900 are registered on the network using a unique personal identification number or PIN associated with each device. In GPRS networks, however, network access is associated with a subscriber or user of a device 900. A GPRS device, therefore, requires a subscriber identity module (not shown), commonly referred to as a SIM card, in order to operate on a GPRS network. Without a SIM card, a GPRS device will not be fully functional. Local or non-network communication functions (if any) may be operable, but the device 900 will be unable to carry out any functions involving communications over network 919. When required network registration or activation procedures have been completed, a device 900 may send and receive communication signals over the network 919. Signals received by the antenna 916 through a communication network 919 are input to the receiver 912, which may perform such common receiver functions as signal amplification, frequency down conversion, filtering, channel selection and the like, and in the example system shown in Fig. 7, analog to digital conversion. Analog to digital conversion of a received signal allows more complex communication functions, such as demodulation and decoding, to be performed in the DSP 920. In a similar manner, signals to be transmitted are processed, including modulation and encoding, for example, by the DSP 920 and input to the transmitter 914 for digital to analog conversion, frequency up conversion, filtering, amplification and transmission over the communication network 919 via the antenna 918.

The DSP 920 not only processes communication signals, but also provides for receiver and transmitter control. For example, the gains applied to communication signals in the receiver 912 and transmitter 914 may be adaptively controlled through automatic gain control algorithms implemented in the DSP 920.

The device 900 preferably includes a microprocessor 938, which controls the overall operation of the device. Communication functions, including at least data and voice communications, are performed through the communication subsystem 911. The microprocessor 938 also interacts with further device subsystems, such as the display 922, flash memory 924, random access memory (RAM) 926, auxiliary input/output (I/O) subsystems 928, serial port 930, keyboard 932, speaker 934, microphone 936, a short-range communications subsystem 940, a power subsystem, and any other device subsystems generally designated as 944.

Some of the subsystems shown in Fig. 7 perform communication-related functions, whereas other subsystems may provide "resident" or on-device functions. Notably, some subsystems, such as keyboard 932 and display 922, for example, may be used for both communication-related functions, such as entering a text message for transmission over a communication network and device-resident functions such as a calculator or task list.

Operating system software used by the microprocessor 938 is preferably stored in a persistent store such as flash memory 924, which may instead be a read only memory (ROM) or similar storage element. The operating system, specific device applications, or parts thereof, may be temporarily loaded into a volatile store such as RAM 926. Received communication signals may also be stored to RAM 926. Flash memory 924 preferably includes data communication module 924B, and when device 900 is enabled for voice communication, a voice communication module 924A. Also included in flash memory 924 are other software modules 924N. In particular, mobile device update management and allocation software may be implemented in a software module, such as software module 924N.

The microprocessor 938, in addition to its operating system functions, preferably enables execution of software applications on the device. A predetermined set of applications that control basic device operations, including at least data and voice communication applications, for example, will normally be installed on the device 900 during manufacture. A preferred application that may be loaded onto the device may be a personal information manager (PIM) application having the ability to organize and manage data items relating to the device user, such as, but not limited to, e-mail, calendar events, voice mails, appointments, and task items. Naturally, one or more memory stores would be available on the device to facilitate storage of PIM data items on the device. Such PIM applications would preferably have the ability to send and receive data items via the wireless network. In a preferred embodiment, the PIM data items are seamlessly integrated, synchronized and updated, via the wireless network, with the device user's corresponding data items stored or associated with a host computer system.

Further applications may also be loaded onto the device 900 through the network 919, an auxiliary I/O subsystem 928, serial port 930, short-range communications subsystem 940 or any other suitable subsystem 944, and installed by a user in the RAM 926 or a non-volatile store for execution by the microprocessor 938. Such flexibility in application installation increases the functionality of the device and may provide enhanced on-device functions, communication-related functions, or both. For example, secure communication applications may enable electronic commerce functions and other such fmancial transactions to be performed using the device 900.

In a data communication mode, a received signal such as a text message or web page download will be processed by the communication subsystem 911 and input to the microprocessor 938, which will preferably further process the received signal for output to the display 922, or alternatively, to an auxiliary I/O device 928. A user of device 900 may also compose data items, such as e-mail messages, for example, using the keyboard 932, which is preferably a complete alphanumeric keyboard or telephone-type keypad, in conjunction with the display 922 and possibly an auxiliary I/O device 928. Such composed items may then be transmitted over a communication network through the communication subsystem 911.

For voice communications, overall operation of the device 900 is substantially similar, except that received signals would preferably be output to a speaker 934 and signals for transmission would be generated by a microphone 936. Alternative voice or audio I/O subsystems, such as a voice message recording subsystem, may also be implemented on the device 900. Although voice or audio signal output is preferably accomplished primarily through the speaker 934, the display 922 may also be used to provide an indication of the identity of a calling party, the duration of a voice call, or other voice call related information, for example.

The serial port 930 would normally be implemented in a personal digital assistant (PDA)-type communication device for which synchronization with a user's desktop computer (not shown) may be desirable, but is an optional device component. Such a port 930 would enable a user to set preferences through an external device or software application and would extend the capabilities of the device by providing for information or software downloads to the device 900 other than through a wireless communication network. The alternate download path may, for example, be used to load an encryption key onto the device through a direct and thus reliable and trusted connection to thereby enable secure device communication.

Additional subsystems may also be included. For example, firmware 942 may include one or more programs or instructions for operation of the mobile device 900. The firmware 942 may be updated periodically as needed, such as by the OTA updating process described above.

A short-range communications subsystem 940 is a further optional component which may provide for communication between the device 900 and different systems or devices, which need not necessarily be similar devices. For example, the subsystem 940 may include an infrared device and associated circuits and components or a BluetoothTM communication module to provide for communication with similarly-enabled systems and devices.

This written description uses illustrative embodiments to disclose the invention, including the best mode, and also to enable a person of ordinary skill in the art to make and use the invention. Other embodiments and devices are within the scope of the claims if they have elements that do not differ from the literal language of the claims or have elements equivalent to those recited in the claims.

### Industrial Applicability

This present invention provides an apparatus and method for over-the-air (OTA) programming or updating of software and/or firmware in mobile communication devices.

## Claims

1. A method of updating a mobile device (100) having a baseline configuration and an original data file stored in a mobile device memory, comprising:
receiving (324) at a mobile device (100) resource requirements data for an update from an update management computing device (200);
determining (326) whether the mobile device (100) has associated update resources to meet the resource requirements;
allocating (328) update resources to the mobile device (100) if the mobile device (100) does not have associated update resources to meet the resource requirements;
transmitting (332) from the mobile device (100) to the update management computing device (200) update request data requesting update data (212) for performing an update of the baseline configuration being stored in a first area of the mobile device memory;
receiving (338) at the mobile device (100) the update data (212) from the update management computing device (200) in response to the transmitted update request data;
creating, with the received update data, an updated configuration in a second area of the memory while the baseline configuration remains unchanged in the first area of the memory and selectable for execution from within the first area of the memory, yielding two manually selectable configurations for execution, the original baseline configuration stored in the first area and the updated configuration stored in the second area;
temporarily executing the mobile device (100) in the updated configuration including copying the original data file that is manipulated into the second area of the memory and updating the data file stored in the second area of the memory while not accessing the original data file;
receiving a user-selection whether or not to set the updated configuration as the new baseline configuration;
if the user-selection is to set the updated configuration as the new baseline configuration, then setting the updated configuration as the new baseline configuration by referencing the updated configuration's location in the second area of the second mobile device memory as the new baseline configuration instead of the previous location of the previous baseline configuration; and
if the user-selection is to revert to the baseline configuration, then deallocating the update resources including the second area of the memory.

2. The method of claim 1, wherein determining whether the mobile device (100) has associated update resources to meet the resource requirements comprises determining (364) whether the mobile device (100) has a minimum amount of available memory in a mobile device memory (110).

3. The method of claim 2, wherein allocating update resources to the mobile device (100) if the mobile device (100) does not have associated update resources to meet the resource requirements comprises; upon determining that the mobile device (100) does not have the minimum amount of available memory, identifying (366) stored mobile device data stored in the mobile device memory (110) that may be purged to make available the minimum amount of available memory in the mobile device memory (110).

4. The method of claim 3, wherein allocating update resources to the mobile device (100) if the mobile device (100) does not have associated update resources to meet the resource requirements further comprises;
upon identifying stored mobile device data stored in the mobile device memory (100) that may be purged to make available the minimum amount of available memory in the mobile device memory (110): determining (368) whether the identified stored mobile device data is stored on a remote storage device (200) operable to communicate with the mobile device (100) over a communication network (20);
upon determining that the identified stored mobile device data is not stored on the remote storage device, transmitting (370) the identified stored mobile device data to the remote storage device (200) for storage; and
purging (372) the identified stored mobile device data from the mobile device memory (110).

5. The method of claim 4, further comprising:
transmitting a request from the mobile device (100) to the remote storage device (200) for transmission of the identified stored mobile device data from the remote storage device (200) to the mobile device (100);
receiving the identified stored mobile device data from the remote storage device (200) in response to the transmitted request; and
storing the identified stored mobile device data in the mobile device memory (110).

6. The method of claim 5, wherein the remote storage device (200) comprises the update management computing device (200).

7. The method of claim 1, wherein updating the mobile device (100) with the received update data further comprises:
storing an update resource in the mobile device memory (110), the update resource specifying the baseline mobile device configuration and updated mobile device configuration;
determining (384) whether an update resource is stored in the mobile device memory (110) during an initialization of the mobile device (100);
upon determining that the update resource is stored in the mobile device memory (110) during an initialization of the mobile device (100), prompting (390) a mobile device user to select one of the baseline mobile device configuration or updated mobile device configuration; and
accepting the updated mobile device configuration or reverting to the baseline mobile device configuration based on the user selection.

8. The method of claim 1, wherein determining whether the mobile device (100) has associated update resources to meet the resource requirements comprises determining whether the mobile device (100) has a minimum amount of computational resources to execute update computations on stored mobile device data stored in the mobile device memory (110) to create updated mobile device data.

9. The method of claim 8, wherein allocating update resources to the mobile device (100) if the mobile device (100) does not have associated update resources to meet the resource requirements comprises:
upon determining that the mobile device (100) does not have the minimum amount of computational resources, identifying stored mobile device data stored in the mobile device memory (110) for which update computations are to be executed ; and
transmitting the identified stored mobile device data to the update management computing device (200) for execution of the update computations to create the updated mobile device data; and purging the identified stored mobile device data from the mobile device memory (110).

10. The method of claim 9, further comprising:
transmitting a request from the mobile device (100) to the update management computing device for transmission of the updated mobile device data from the update management computing device (200) to the mobile device (100);
receiving the updated mobile device data from the update management computing device (200) in response to the transmitted request; and
storing the updated stored mobile device data in the mobile device memory (110).

11. The method of claim 1, wherein updating the mobile device (100) with the received update data (212) further comprises copy-on-write of stored baseline configuration data stored into the available memory of the mobile device (100), wherein the copy-on-write technique involves copying only data that are updated as the data are updated and retaining references to unchanged data.

12. The method of any one of the preceding claims, comprising;
transmitting (322) from an update management computing device (200) to a mobile device (100) resource requirements data for an update;
receiving (334) at the update management computing device (200) an update request transmitted from the mobile device (100) in response to the transmitted resource requirements data; and
transmitting (336) from the update management computing device (200) to the mobile device (100) the update data in response to the update request.

13. The method of claim 12, further comprising:
receiving stored mobile device data transmitted from the mobile device (100);
storing the stored mobile device data in the update management computing device (200);
receiving a stored mobile device data request transmitted from the mobile device (100); and
transmitting from the update management computing device (200) to the mobile device (100) the stored mobile device data.

14. The method of claim 12, further comprising:
receiving stored mobile device data transmitted from the mobile device (100);
storing the stored mobile device data in the update management computing device (200); and
executing update computations to create updated mobile device data in the update management computing device (200).

15. The method of claim 14, further comprising:
receiving an updated mobile device data request transmitted from the mobile device (100); and
transmitting from the update management computing device (200) to the mobile device (100) the updated mobile device data.

16. The method of claim 14, further comprising:
receiving a stored mobile device data request transmitted from the mobile device (100); and
transmitting from the update management computing device (200) to the mobile device (100) the stored mobile device data.

17. Executable program code stored in a computer readable medium and comprising instructions operable to cause a computer device to perform the method of any one of claims 1 to 16 when executed on the computer device.

18. A mobile communication device (100) comprising:
a processing subsystem (120), a memory subsystem (110), and
a communication subsystem (130), the processing subsystem (120) coupled to the memory subsystem (110) and communication subsystem (130) and operable to store and retrieve data in the memory subsystem (110), to execute instructions stored in the memory subsystem (110), and to cause the communication subsystem (130) to transmit and receive data over the communication network (20); and
mobile device update management and allocation means adapted to:
store, in a first area of the memory of the mobile device, a baseline mobile device configuration and an original data file,
cause the processing subsystem (120) to receive resource requirements data for an update transmitted over a communication network (20),
determine whether the mobile device (100) has associated update resources to meet the resource requirements,
allocate update resources in the mobile device (100) if the mobile device (100) does not have associated update resources to meet the resource requirements,
transmit over the communication network (20) update request data requesting update data (212) from an update management computing device,
receive, from the update management computing device, the update data for performing an update of the baseline configuration to create an updated configuration, and
create, with the received update data, an updated configuration in a second area of the memory while the baseline configuration remains unchanged in the first area of the memory and selectable for execution from within the first area of the memory, yielding two manually selectable configurations for execution, the original baseline configuration stored in the first area and the updated configuration stored in the second area,
wherein the mobile device (100) is temporarily executed in the updated configuration Including copying the original data file that is manipulated into the second area of the memory and updating the data file stored in the second area of the memory while not accessing the original data file,
wherein the mobile device (100) is adapted to:
receive a user-selection whether or not to set the updated configuration as the new baseline configuration;
if the user-selection is to set the updated configuration as the new baseline configuration, then setting the updated configuration as the new baseline configuration by referencing the updated configuration's location in the second area of the second mobile device memory as the new baseline configuration instead of the previous location of the previous baseline configuration, and
if the user-selection is to revert to the baseline configuration, then deallocating the update resources Including the second area of the memory.

19. The mobile device (100) of claim 18, wherein the mobile device update management and allocation means are further adapted to cause the processing subsystem (120) to determine whether the mobile device (100) has a minimum amount of available memory in the mobile device memory subsystem (110), and upon determining that the mobile device (100) does not have the minimum amount of available memory, identify stored mobile device data stored in the memory subsystem (110) that may be purged to make available the minimum amount of available memory.

20. The mobile device (100) of claim 19, wherein the mobile device update management and allocation means are further adapted to cause the processing subsystem (120) to determine whether the identified stored mobile device data is stored on a remote storage device (200) operable to communicate with the mobile device (100) over a communication network (20), and upon determining that the identified stored mobile device data is not stored on the remote storage device (200), transmit the identified stored mobile device data to the remote storage device (200) for storage and purge the identified stored mobile device data from the mobile device memory (110) after the transmission.

21. The mobile device (100) of claim 20, wherein the mobile device update management and allocation means are further adapted to transmit a request to the remote storage device (200) for transmission of the identified stored mobile device data from the remote storage device (200) to the mobile device (100), receive identified stored mobile device data from the remote storage device (200) in response to the transmitted request, and store the identified stored mobile device data in the mobile device memory subsystem (110).

22. The mobile device (100) of claim 18, wherein the mobile device update management and allocation means are further adapted to cause the processing subsystem (120) to determine whether the mobile device (100) has a minimum amount of computational resources to execute update computations on stored mobile device data stored in the mobile device memory subsystem (110) to create updated mobile device data, and upon determining that the mobile device (100) does not have the minimum amount of computational resources, identify stored mobile device data stored in the mobile device memory subsystem (110) for which update computations are to be executed, and transmit the identified stored mobile device data to the update management computing device (200) for execution of the update computations to create the updated mobile device data.

23. The mobile device (100) of claim 22, wherein the mobile device update management and allocation means are further adapted to transmit a request to the update management computing device (200) for transmission of the updated mobile device data from the update management computing device (200) to the mobile device (100), receive the updated mobile device (100) data from the update management computing device (200) in response to the transmitted request, and store the updated mobile device data In the mobile device memory subsystem (110).

24. The mobile device (100) of claim 18, wherein the mobile device update management and allocation means are further adapted to cause the processing subsystem (120) to store an update resource in the mobile device memory subsystem (110), the update resource specifying the baseline mobile device configuration and updated mobile device configuration, determine whether an update resource is stored in the mobile device memory (110) during an initialization of the mobile device (100), upon determining that the update resource is stored in the mobile device memory subsystem (110) during an initialization of the mobile device (100), prompt a mobile device user to select one of the baseline mobile device configuration or the updated mobile device configuration, and accept the updated mobile device configuration or revert to the baseline mobile device configuration based on the user selection.

25. The mobile device (100) of any one of claims 18 to 24, further comprising:
an update management server (200) comprising a processing subsystem (220), a memory subsystem (210), and a communication subsystem (230), the processing subsystem (220) coupled to the memory subsystem (210) and communication subsystem (230) and operable to store and retrieve data in the memory subsystem (210), to execute instructions stored in the memory subsystem (210), and to cause the communication subsystem (230) to transmit and receive data over the communication network (20); and
update server management and allocation means adapted to cause the processing subsystem (220) to transmit resource requirements data for an update to a mobile device (100) over the communication network (20), receive update request data transmitted from a mobile device (100) over the communication network (20) in response to the transmitted resource requirements data, and transmit update data (212) back to a mobile device (100) over the communication network (20) in response to the update request data.

26. The mobile device (100) of claim 25, wherein the update server management and allocation means are further adapted to cause the processing subsystem (220) to receive stored mobile device data transmitted from a mobile device (100), store the stored mobile device data in the memory subsystem (210), receive a stored mobile device data request transmitted from a mobile device (100), and transmit to a mobile device (100) the stored mobile device data.

27. The mobile device (100) of claim 26, wherein the update server management and allocation means are further adapted to cause the processing subsystem (220) to receive stored mobile device data transmitted from a mobile device (100), store the stored mobile device data in the memory subsystem (210), and execute update computations to create updated mobile device data.

28. The mobile device (100) of claim 27, wherein the update server management and allocation means are further adapted to cause the processing subsystem (220) to receive an updated mobile device data request transmitted from a mobile device (100), and transmit from the updated mobile device data to a mobile device (100).

29. The mobile device (100) of claim 26, wherein the update server management and allocation means are further adapted to cause the processing subsystem (220) to receive a stored mobile device data request transmitted from a mobile device (100) and transmit the stored mobile device data to a mobile device (100).

30. The mobile device (100) of claim 18, wherein the update management and allocation means are further adapted to cause the mobile device (100) to identify stored mobile device data stored in the mobile device memory (110) that may be purged to make available the memory resources, determine whether the identified stored mobile device data is stored on a remote storage device (200) operable to communicate with the mobile device (100) over the communication network (20), and upon determining that the identified stored mobile device data is not stored on the remote storage device (200), transmit the identified stored mobile device data to the remote storage device (200) for storage and purging the identified stored mobile device data from the mobile device memory subsystem (110).

31. The mobile device (100) of claim 30, wherein the update management and allocation means are further adapted to transmit a request from the mobile device (100) to the remote storage device (200) for transmission of the identified stored mobile device data from the remote storage device (200) to the mobile device (100), receive the identified stored mobile device data from the remote storage device (200) in response to the transmitted request, and store the identified stored mobile device data in the mobile device memory (110).

32. The method of claim 1 further comprising, before said creating:
transmitting data, that is stored in the second area of the mobile device - memory, to the update server for temporary storage, to make a required amount of memory available in the second area for storing of the updated configuration.

33. The method of claim 32 wherein a database file stored on the mobile device is to be re-indexed as a result of the update, and the method further includes:
forwarding the database file to the update server for the database file to be re-indexed by the update server; and
receiving the re-indexed database file back from the update server.

## Patentansprüche

1. Verfahren zum Aktualisieren einer mobilen Vorrichtung (100) mit einer Basiskonfiguration und einer ursprünglichen Datendatei, die in einem Speicher der mobilen Vorrichtung gespeichert sind, das aufweist:
Empfangen (324) an einer mobilen Vorrichtung (100) von Ressourcen-Anforderungen-Daten für eine Aktualisierung von einer Aktualisierungsverwaltungs-Computervorrichtung (200);
Bestimmen (326), ob die mobile Vorrichtung (100) assoziierte Aktualisierungs-Ressourcen hat, um die Ressourcen-Anforderungen zu erfüllen;
Zuteilen (328) von Aktualisierungs-Ressourcen zu der mobilen Vorrichtung (100), wenn die mobile Vorrichtung (100) keine assoziierten Aktualisierungs-Ressourcen hat, um die Ressourcen-Anforderungen zu erfüllen;
Senden (332) von der mobilen Vorrichtung (100) an die Aktualisierungsverwaltungs-Computervorrichtung (200) von Aktualisierungsanforderungsdaten, die Aktualisierungsdaten (212) anfordern zum Durchführen einer Aktualisierung der Basiskonfiguration, die in einem ersten Bereich des Speichers der mobilen Vorrichtung gespeichert ist;
Empfangen (338) an der mobilen Vorrichtung (100) der Aktualisierungsdaten (212) von der Aktualisierungsverwaltungs-Computervorrichtung (200) in Reaktion auf die gesendeten Aktualisierungsanforderungsdaten;
Erstellen, mit den empfangenen Aktualisierungsdaten, einer Aktualisierungskonfiguration in einem zweiten Bereich des Speichers, während die Basiskonfiguration unverändert bleibt in dem ersten Bereich des Speichers und zur Ausführung aus dem ersten Bereich des Speichers wählbar, wodurch sich zwei manuell wählbare Konfigurationen zur Ausführung ergeben,
wobei die ursprüngliche Basiskonfiguration in dem ersten Bereich gespeichert ist und die aktualisierte Konfiguration in dem zweiten Bereich gespeichert ist;
temporäres Ausführen der mobilen Vorrichtung (100) in der aktualisierten Konfiguration, einschließlich Kopieren der ursprünglichen Datendatei, die manipuliert ist, in den zweiten Bereich des Speichers und Aktualisieren der Datendatei, die in dem zweiten Bereich des Speichers gespeichert ist, während nicht auf die ursprüngliche Datendatei zugegriffen wird;
Empfangen einer Benutzerauswahl, ob die aktualisierte Konfiguration als die neue Basiskonfiguration zu setzen ist oder nicht;
wenn die Benutzerauswahl ist, die aktualisierte Konfiguration als die neue Basiskonfiguration zu setzen, dann Setzen der aktualisierten Konfiguration als die neue Basiskonfiguration durch Referenzieren der Position der aktualisierten Konfiguration in dem zweiten Bereich des zweiten Speichers der mobilen Vorrichtung als die neue Basiskonfiguration anstelle der vorherigen Position der vorherigen Basiskonfiguration; und
wenn die Benutzerauswahl ist, zu der Basiskonfiguration zurückzukehren, dann Freigeben der Aktualisierungs-Ressourcen, einschließlich des zweiten Bereichs des Speichers.

2. Das Verfahren gemäß Anspruch 1, wobei das Bestimmen, ob die mobile Vorrichtung (100) assoziierte Aktualisierungs-Ressourcen hat, um die Ressourcen-Anforderungen zu erfüllen, ein Bestimmen (364) aufweist, ob die mobile Vorrichtung (100) eine Mindestmenge von verfügbarem Speicher in einem Speicher (110) der mobilen Vorrichtung hat.

3. Das Verfahren gemäß Anspruch 2, wobei das Zuteilen von Aktualisierungs-Ressourcen zu der mobilen Vorrichtung (100), wenn die mobile Vorrichtung (100) keine assoziierten Aktualisierungs-Ressourcen hat, um die Ressourcen-Anforderungen zu erfüllen, aufweist: bei einem Bestimmen, dass die mobile Vorrichtung (100) nicht die Mindestmenge von verfügbarem Speicher hat, Identifizieren (366) gespeicherter Daten der mobilen Vorrichtung, die in dem Speicher (110) der mobilen Vorrichtung gespeichert sind, die entfernt werden können, um die Mindestmenge von verfügbarem Speicher in dem Speicher (110) der mobilen Vorrichtung verfügbar zu machen.

4. Das Verfahren gemäß Anspruch 3, wobei das Zuteilen von Aktualisierungs-Ressourcen zu der mobilen Vorrichtung (100), wenn die mobile Vorrichtung (100) keine assoziierten Aktualisierungs-Ressourcen hat, um die Ressourcen-Anforderungen zu erfüllen, weiter aufweist:
bei einem Identifizieren von gespeicherten Daten der mobilen Vorrichtung, die in dem Speicher (110) der mobilen Vorrichtung gespeichert sind, die entfernt werden können, um die Mindestmenge von verfügbarem Speicher in dem Speicher (110) der mobilen Vorrichtung verfügbar zu machen: Bestimmen (368), ob die identifizierten gespeicherten Daten der mobilen Vorrichtung auf einer entfernten Speichervorrichtung (200) gespeichert sind, die betriebsfähig ist zum Kommunizieren mit der mobilen Vorrichtung (100) über ein Kommunikationsnetzwerk (20);
bei einem Bestimmen, dass die identifizierten gespeicherten Daten der mobilen Vorrichtung nicht auf der entfernten Speichervorrichtung gespeichert sind, Senden (370) der identifizierten gespeicherten Daten der mobilen Vorrichtung an die entfernte Speichervorrichtung (200) zur Speicherung; und
Entfernen (372) der identifizierten gespeicherten Daten der mobilen Vorrichtung aus dem Speicher (110) der mobilen Vorrichtung.

5. Das Verfahren gemäß Anspruch 4, das weiter aufweist:
Senden einer Anforderung von der mobilen Vorrichtung (100) an die entfernte Speichervorrichtung (200) zum Senden der identifizierten gespeicherten Daten der mobilen Vorrichtung von der entfernten Speichervorrichtung (200) an die mobile Vorrichtung (100);
Empfangen der identifizierten gespeicherten Daten der mobilen Vorrichtung von der entfernten Speichervorrichtung (200) in Reaktion auf die gesendete Anforderung; und
Speichern der identifizierten gespeicherten Daten der mobilen Vorrichtung in dem Speicher (110) der mobilen Vorrichtung.

6. Das Verfahren gemäß Anspruch 5, wobei die entfernte Speichervorrichtung (200) die Aktualisierungsverwaltungs-Computervorrichtung (200) aufweist.

7. Das Verfahren gemäß Anspruch 1, wobei das Aktualisieren der mobilen Vorrichtung (100) mit den empfangenen Aktualisierungsdaten weiter aufweist:
Speichern einer Aktualisierungs-Ressource in dem Speicher (110) der mobilen Vorrichtung, wobei die Aktualisierungs-Ressource die Basiskonfiguration der mobilen Vorrichtung und die aktualisierte Konfiguration der mobilen Vorrichtung spezifiziert;
Bestimmen (384), ob eine Aktualisierungs-Ressource in dem Speicher (110) der mobilen Vorrichtung gespeichert ist während einer Initialisierung der mobilen Vorrichtung (100);
bei einem Bestimmen, dass die Aktualisierungs-Ressource in dem Speicher (110) der mobilen Vorrichtung gespeichert ist während einer Initialisierung der mobilen Vorrichtung (100), Auffordern (390) eines Benutzers der mobilen Vorrichtung, eine der Basiskonfiguration der mobilen Vorrichtung oder
der aktualisierten Konfiguration der mobilen Vorrichtung auszuwählen; und Annehmen der aktualisierten Konfiguration der mobilen Vorrichtung oder Zurückkehren zu der Basiskonfiguration der mobilen Vorrichtung basierend auf der Benutzerauswahl.

8. Das Verfahren gemäß Anspruch 1, wobei das Bestimmen, ob die mobile Vorrichtung (100) assoziierte Aktualisierungs-Ressourcen hat, um die Ressourcen-Anforderungen zu erfüllen, aufweist ein Bestimmen, ob die mobile Vorrichtung (100) eine Mindestmenge von Rechenressourcen hat, um Aktualisierungsberechnungen auf gespeicherten Daten der mobilen Vorrichtung auszuführen, die in dem Speicher (110) der mobilen Vorrichtung gespeichert sind, um aktualisierte Daten der mobilen Vorrichtung zu erzeugen.

9. Das Verfahren gemäß Anspruch 8, wobei das Zuteilen von Aktualisierungs-Ressourcen zu der mobilen Vorrichtung (100), wenn die mobile Vorrichtung (100) keine assoziierten Aktualisierungs-Ressourcen hat, um die Ressourcen-Anforderungen zu erfüllen, aufweist:
bei einem Bestimmen, dass die mobile Vorrichtung (100) nicht die Mindestmenge von Rechenressourcen hat, Identifizieren gespeicherter Daten der mobilen Vorrichtung, die in dem Speicher (110) der mobilen Vorrichtung gespeichert sind, für die Aktualisierungsberechnungen auszuführen sind; und
Senden der identifizierten gespeicherten Daten der mobilen Vorrichtung an die Aktualisierungsverwaltungs-Computervorrichtung (200) zur Ausführung der Aktualisierungsberechnungen, um die aktualisierten Daten der mobilen Vorrichtung zu erzeugen; und Entfernen der identifizierten gespeicherten Daten der mobilen Vorrichtung aus dem Speicher (110) der mobilen Vorrichtung.

10. Das Verfahren gemäß Anspruch 9, das weiter aufweist:
Senden einer Anforderung von der mobilen Vorrichtung (100) an die Aktualisierungsverwaltungs-Computervorrichtung zum Senden der aktualisierten Daten der mobilen Vorrichtung von der Aktualisierungsverwaltungs-Computervorrichtung (200) an die mobile Vorrichtung (100);
Empfangen der aktualisierten Daten der mobilen Vorrichtung von der Aktualisierungsverwaltungs-Computervorrichtung (200) in Reaktion auf die gesendete Anforderung; und
Speichern der aktualisierten gespeicherten Daten der mobilen Vorrichtung in dem Speicher (110) der mobilen Vorrichtung.

11. Das Verfahren gemäß Anspruch 1, wobei das Aktualisieren der mobilen Vorrichtung (100) mit den empfangenen Aktualisierungsdaten (212) weiter aufweist ein Kopieren-beim-Schreiben von gespeicherten Basiskonfigurationsdaten, die in dem verfügbaren Speicher der mobilen Vorrichtung (100) gespeichert sind, wobei die Kopieren-beim-Schreiben-Technik ein Kopieren nur von Daten, die aktualisiert werden, wenn die Daten aktualisiert werden, und Beibehalten von Referenzen zu unveränderten Daten beinhaltet.

12. Das Verfahren gemäß einem der vorhergehenden Ansprüche, das aufweist:
Senden (322) von einer Aktualisierungsverwaltungs-Computervorrichtung (200) an eine mobile Vorrichtung (100) von Ressourcen-Anforderungen-Daten für eine Aktualisierung;
Empfangen (334) an der Aktualisierungsverwaltungs-Computervorrichtung (200) einer Aktualisierungsanforderung, die von der mobilen Vorrichtung (100) gesendet wird, in Reaktion auf die gesendeten Ressourcen-Anforderungen-Daten; und
Senden (336) von der Aktualisierungsverwaltungs-Computervorrichtung (200) an die mobile Vorrichtung (100) der Aktualisierungsdaten in Reaktion auf die Aktualisierungsanforderung.

13. Das Verfahren gemäß Anspruch 12, das weiter aufweist:
Empfangen von gespeicherten Daten der mobilen Vorrichtung, die von der mobilen Vorrichtung (100) gesendet werden;
Speichern der gespeicherten Daten der mobilen Vorrichtung in der Aktualisierungsverwaltungs-Computervorrichtung (200);
Empfangen einer Anforderung für gespeicherte Daten der mobilen Vorrichtung, die von der mobilen Vorrichtung (100) gesendet wird; und
Senden von der Aktualisierungsverwaltungs-Computervorrichtung (200) an die mobile Vorrichtung (100) der gespeicherten Daten der mobilen Vorrichtung.

14. Das Verfahren gemäß Anspruch 12, das weiter aufweist:
Empfangen von gespeicherten Daten der mobilen Vorrichtung, die von der mobilen Vorrichtung (100) gesendet werden;
Speichern der gespeicherten Daten der mobilen Vorrichtung in der Aktualisierungsverwaltungs-Computervorrichtung (200); und
Ausführen von Aktualisierungsberechnungen, um aktualisierte Daten der mobilen Vorrichtung zu erzeugen in der Aktualisierungsverwaltungs-Computervorrichtung (200).

15. Das Verfahren gemäß Anspruch 14, das weiter aufweist:
Empfangen einer Anforderung für aktualisierte Daten der mobilen Vorrichtung, die von der mobilen Vorrichtung (100) gesendet wird; und
Senden von der Aktualisierungsverwaltungs-Computervorrichtung (200) an die mobile Vorrichtung (100) der aktualisierten Daten der mobilen Vorrichtung.

16. Das Verfahren gemäß Anspruch 14, das weiter aufweist:
Empfangen einer Anforderung für gespeicherte Daten der mobilen Vorrichtung g, die von der mobilen Vorrichtung (100) gesendet wird; und
Senden von der Aktualisierungsverwaltungs-Computervorrichtung (200) an die mobile Vorrichtung (100) der gespeicherten Daten der mobilen Vorrichtung.

17. Ausführbarer Programmcode, der in einem computerlesbaren Medium gespeichert ist und Anweisungen aufweist, die betriebsfähig sind, um eine Computervorrichtung zu veranlassen, das Verfahren gemäß einem der Ansprüche 1 bis 16 durchzuführen, wenn auf der Computervorrichtung ausgeführt.

18. Eine mobile Kommunikationsvorrichtung (100), die aufweist:
ein Verarbeitungsteilsystem (120), ein Speicherteilsystem (110), und ein Kommunikationsteilsystem (130), wobei das Verarbeitungsteilsystem (120) mit dem Speicherteilsystem (110) und dem Kommunikationsteilsystem (130) gekoppelt ist und betriebsfähig ist zum Speichern von Daten in dem und Abrufen von Daten aus dem Speicherteilsystem (110), Ausführen von Anweisungen, die in dem Speicherteilsystem (110) gespeichert sind, und
Veranlassen des Kommunikationsteilsystems (130), Daten über das Kommunikationsnetzwerk (20) zu senden und zu empfangen; und
Mobilvorrichtung-Aktualisierungs-Verwaltungs- und Zuteilungs-Mittel, die ausgebildet sind zum:
Speichern, in einem ersten Bereich des Speichers der mobilen Vorrichtung, einer Basiskonfiguration der mobilen Vorrichtung und einer ursprünglichen Datendatei,
Veranlassen des Verarbeitungsteilsystems (120), Ressourcen-Anforderungen-Daten für eine Aktualisierung zu empfangen, die über ein Kommunikationsnetzwerk (20) gesendet werden,
Bestimmen, ob die mobile Vorrichtung (100) assoziierte Aktualisierungs-Ressourcen hat, um die Ressourcen-Anforderungen zu erfüllen,
Zuteilen von Aktualisierungs-Ressourcen in der mobilen Vorrichtung (100),
wenn die mobile Vorrichtung (100) keine assoziierten Aktualisierungs-Ressourcen hat, um die Ressourcen-Anforderungen zu erfüllen,
Senden über das Kommunikationsnetzwerk (20) von Aktualisierungsanforderungsdaten, die Aktualisierungsdaten (212) von einer Aktualisierungsverwaltungs-Computervorrichtung anfordern,
Empfangen, von der Aktualisierungsverwaltungs-Computervorrichtung, der Aktualisierungsdaten zum Durchführen einer Aktualisierung der Basiskonfiguration, um eine aktualisierte Konfiguration zu erzeugen, und
Erzeugen, mit den empfangenen Aktualisierungsdaten, einer aktualisierten Konfiguration in einem zweiten Bereich des Speichers, während die Basiskonfiguration unverändert bleibt in dem ersten Bereich des Speichers und zur Ausführung aus dem ersten Bereich des Speichers wählbar, wodurch sich zwei manuell wählbare Konfigurationen zur Ausführung ergeben, wobei die ursprüngliche Basiskonfiguration in dem ersten Bereich gespeichert ist und die aktualisierte Konfiguration in dem zweiten Bereich gespeichert ist,
wobei die mobile Vorrichtung (100) temporär in der aktualisierten Konfiguration ausgeführt wird, einschließlich Kopieren der ursprünglichen Datendatei, die manipuliert ist, in den zweiten Bereich des Speichers und Aktualisieren der Datendatei, die in dem zweiten Bereich des Speichers gespeichert ist, während nicht auf die ursprüngliche Datendatei zugegriffen wird,
wobei die mobile Vorrichtung (100) ausgebildet ist zum:
Empfangen einer Benutzerauswahl, ob die aktualisierte Konfiguration als die neue Basiskonfiguration zu setzen ist oder nicht;
wenn die Benutzerauswahl ist, die aktualisierte Konfiguration als die neue Basiskonfiguration zu setzen, dann Setzen der aktualisierten Konfiguration als die neue Basiskonfiguration durch Referenzieren der Position der aktualisierten Konfiguration in dem zweiten Bereich des zweiten Speichers der mobilen Vorrichtung als die neue Basiskonfiguration anstelle der vorherigen Position der vorherigen Basiskonfiguration, und
wenn die Benutzerauswahl ist, zu der Basiskonfiguration zurückzukehren, dann Freigeben der Aktualisierungs-Ressourcen, einschließlich des zweiten Bereichs des Speichers.

19. Die mobile Vorrichtung (100) gemäß Anspruch 18, wobei die Mobilvorrichtung-Aktualisierungs-Verwaltungs- und Zuteilungs-Mittel weiter ausgebildet sind zum Veranlassen des Verarbeitungsteilsystems (120) zum Bestimmen, ob die mobile Vorrichtung (100) eine Mindestmenge von verfügbarem Speicher in dem Speicherteilsystem (110) der mobilen Vorrichtung hat, und bei einem Bestimmen, dass die mobile Vorrichtung (100) nicht die Mindestmenge von verfügbarem Speicher hat, Identifizieren gespeicherter Daten der mobilen Vorrichtung, die in dem Speicherteilsystem (110) gespeichert sind, die entfernt werden können, um die Mindestmenge von verfügbarem Speicher verfügbar zu machen.

20. Die mobile Vorrichtung (100) gemäß Anspruch 19, wobei die Mobilvorrichtung-Aktualisierungs-Verwaltungs- und Zuteilungs-Mittel weiter ausgebildet sind zum Veranlassen des Verarbeitungsteilsystems (120) zum Bestimmen, ob die identifizierten gespeicherten Daten der mobilen Vorrichtung auf einer entfernten Speichervorrichtung (200) gespeichert sind, die betriebsfähig ist zum Kommunizieren mit der mobilen Vorrichtung (100) über ein Kommunikationsnetzwerk (20), und bei einem Bestimmen, dass die identifizierten gespeicherten Daten der mobilen Vorrichtung nicht auf der entfernten Speichervorrichtung (200) gespeichert sind, Senden der identifizierten gespeicherten Daten der mobilen Vorrichtung an die entfernte Speichervorrichtung (200) zur Speicherung und Entfernen der identifizierten gespeicherten Daten der mobilen Vorrichtung aus dem Speicher (110) der mobilen Vorrichtung nach dem Senden.

21. Die mobile Vorrichtung (100) gemäß Anspruch 20, wobei die Mobilvorrichtung-Aktualisierungs-Verwaltungs- und Zuteilungs-Mittel weiter ausgebildet sind zum Senden einer Anforderung an die entfernte Speichervorrichtung (200) zum Senden der identifizierten gespeicherten Daten der mobilen Vorrichtung von der entfernten Speichervorrichtung (200) an die mobile Vorrichtung (100), Empfangen der identifizierten gespeicherten Daten der mobilen Vorrichtung von der entfernten Speichervorrichtung (200) in Reaktion auf die gesendete Anforderung, und Speichern der identifizierten gespeicherten Daten der mobilen Vorrichtung in dem Speicherteilsystem (110) der mobilen Vorrichtung.

22. Die mobile Vorrichtung (100) gemäß Anspruch 18, wobei die Mobilvorrichtung-Aktualisierungs-Verwaltungs- und Zuteilungs-Mittel weiter ausgebildet sind zum Veranlassen des Verarbeitungsteilsystems (120) zum Bestimmen, ob die mobile Vorrichtung (100) eine Mindestmenge von Rechenressourcen hat, um Aktualisierungsberechnungen auf gespeicherten Daten der mobilen Vorrichtung auszuführen, die in dem Speicherteilsystem (110) der mobilen Vorrichtung gespeichert sind, um aktualisierte Daten der mobilen Vorrichtung zu erzeugen, und bei einem Bestimmen, dass die mobile Vorrichtung (100) nicht die Mindestmenge von Rechenressourcen hat, Identifizieren gespeicherter Daten der mobilen Vorrichtung, die in dem Speicherteilsystem (110) der mobilen Vorrichtung gespeichert sind, für die Aktualisierungsberechnungen auszuführen sind, und Senden der identifizierten gespeicherten Daten der mobilen Vorrichtung an die Aktualisierungsverwaltungs-Computervorrichtung (200) zur Ausführung der Aktualisierungsberechnungen, um die aktualisierten Daten der mobilen Vorrichtung zu erzeugen.

23. Die mobile Vorrichtung (100) gemäß Anspruch 22, wobei die Mobilvorrichtung-Aktualisierungs-Verwaltungs- und Zuteilungs-Mittel weiter ausgebildet sind zum Senden einer Anforderung an die Aktualisierungsverwaltungs-Computervorrichtung (200) zum Senden der aktualisierten Daten der mobilen Vorrichtung von der Aktualisierungsverwaltungs-Computervorrichtung (200) an die mobile Vorrichtung (100), Empfangen der aktualisierten Daten der mobilen Vorrichtung (100) von der Aktualisierungsverwaltungs-Computervorrichtung (200) in Reaktion auf die gesendete Anforderung, und Speichern der aktualisierten Daten der mobilen Vorrichtung in dem Speicherteilsystem (110) der mobilen Vorrichtung.

24. Die mobile Vorrichtung (100) gemäß Anspruch 18, wobei die Mobilvorrichtung-Aktualisierungs-Verwaltungs- und Zuteilungs-Mittel weiter ausgebildet sind zum Veranlassen der Verarbeitungsteilsystems (120) zum Speichern einer Aktualisierungs-Ressource in dem Speicherteilsystem (110) der mobilen Vorrichtung, wobei die Aktualisierungs-Ressource die Basiskonfiguration der mobilen Vorrichtung und die aktualisierte Konfiguration der mobilen Vorrichtung spezifiziert, Bestimmen, ob eine Aktualisierungs-Ressource in dem Speicher (110) der mobilen Vorrichtung gespeichert ist während einer Initialisierung der mobilen Vorrichtung (100), bei einem Bestimmen, dass die Aktualisierungs-Ressource in dem Speicherteilsystem (110) der mobilen Vorrichtung gespeichert ist während einer Initialisierung der mobilen Vorrichtung (100), Auffordern eines Benutzers der mobilen Vorrichtung, eine der Basiskonfiguration der mobilen Vorrichtung oder der aktualisierten Konfiguration der mobilen Vorrichtung auszuwählen, und Annehmen der aktualisierten Konfiguration der mobilen Vorrichtung oder Zurückkehren zu der Basiskonfiguration der mobilen Vorrichtung basierend auf der Benutzerauswahl.

25. Die mobile Vorrichtung (100) gemäß einem der Ansprüche 18 bis 24, die weiter aufweist:
einen Aktualisierungsverwaltungsserver (200), der ein Verarbeitungsteilsystem (220), ein Speicherteilsystem (210) und ein Kommunikationsteilsystem (230) aufweist, wobei das Verarbeitungsteilsystem (220) mit dem Speicherteilsystem (210) und dem Kommunikationsteilsystem (230) gekoppelt ist und betriebsfähig ist zum Speichern von Daten in dem und Abrufen von Daten aus dem Speicherteilsystem (210), Ausführen von Anweisungen, die in dem Speicherteilsystem (210) gespeichert sind, und Veranlassen des Kommunikationsteilsystems (230), Daten über das Kommunikationsnetzwerk (20) zu senden und zu empfangen; und
Aktualisierungs-Server-Verwaltungs- und Zuteilungs-Mittel, die ausgebildet sind zum Veranlassen des Verarbeitungsteilsystems (220) zum Senden von Ressourcen-Anforderungen-Daten für eine Aktualisierung an eine mobile Vorrichtung (100) über das Kommunikationsnetzwerk (20), Empfangen von Aktualisierungsanforderungsdaten, die von einer mobilen Vorrichtung (100) über das Kommunikationsnetzwerk (20) gesendet werden, in Reaktion auf die gesendeten Ressourcen-Anforderungen-Daten, und Senden von Aktualisierungsdaten (212) zurück an die mobile Vorrichtung (100) über das Kommunikationsnetzwerk (20) in Reaktion auf die Aktualisierungsanforderungsdaten.

26. Die mobile Vorrichtung (100) gemäß Anspruch 25, wobei die Aktualisierungs-Server-Verwaltungs- und Zuteilungs-Mittel weiter ausgebildet sind zum Veranlassen des Verarbeitungsteilsystems (220) zum Empfangen von gespeicherten Daten der mobilen Vorrichtung, die von einer mobilen Vorrichtung (100) gesendet werden, Speichern der gespeicherten Daten der mobilen Vorrichtung in dem Speicherteilsystem (210), Empfangen einer Anforderung für gespeicherte Daten der mobilen Vorrichtung, die von einer mobilen Vorrichtung (100) gesendet wird, und Senden an eine mobile Vorrichtung (100) der gespeicherten Daten der mobilen Vorrichtung.

27. Die mobile Vorrichtung (100) gemäß Anspruch 26, wobei die Aktualisierungs-Server-Verwaltungs- und Zuteilungs-Mittel weiter ausgebildet sind zum Veranlassen des Verarbeitungsteilsystems (220) zum Empfangen von gespeicherten Daten der mobilen Vorrichtung, die von einer mobilen Vorrichtung (100) gesendet werden, Speichern der gespeicherten Daten der mobilen Vorrichtung in dem Speicherteilsystem (210), und Ausführen von Aktualisierungsberechnungen, um aktualisierte Daten der mobilen Vorrichtung zu erzeugen.

28. Die mobile Vorrichtung (100) gemäß Anspruch 27, wobei die Aktualisierungs-Server-Verwaltungs- und Zuteilungs-Mittel weiter ausgebildet sind zum Veranlassen des Verarbeitungsteilsystems (220) zum Empfangen einer Anforderung für aktualisierte Daten der mobilen Vorrichtung, die von einer mobilen Vorrichtung (100) gesendet wird, und Senden der aktualisierten Daten der mobilen Vorrichtung an eine mobile Vorrichtung (100).

29. Die mobile Vorrichtung (100) gemäß Anspruch 26, wobei die Aktualisierungs-Server-Verwaltungs- und Zuteilungs-Mittel weiter ausgebildet sind zum Veranlassen des Verarbeitungsteilsystems (220) zum Empfangen einer Anforderung für gespeicherte Daten der mobilen Vorrichtung, die von einer mobilen Vorrichtung (100) gesendet wird, und Senden der gespeicherten Daten der mobilen Vorrichtung an eine mobile Vorrichtung (100).

30. Die mobile Vorrichtung (100) gemäß Anspruch 18, wobei die Aktualisierungs-Verwaltungs- und Zuteilungs-Mittel weiter ausgebildet sind zum Veranlassen der mobilen Vorrichtung (100) zum Identifizieren von gespeicherten Daten der mobilen Vorrichtung, die in dem Speicher (110) der mobilen Vorrichtung gespeichert sind, die entfernt werden können, um die Speicherressourcen verfügbar zu machen, Bestimmen, ob die identifizierten gespeicherten Daten der mobilen Vorrichtung auf einer entfernten Speichervorrichtung (200) gespeichert sind, die betriebsfähig ist zum Kommunizieren mit der mobilen Vorrichtung (100) über das Kommunikationsnetzwerk (20), und bei einem Bestimmen, dass die identifizierten gespeicherten Daten der mobilen Vorrichtung nicht auf der entfernten Speichervorrichtung (200) gespeichert sind, Senden der identifizierten gespeicherten Daten der mobilen Vorrichtung an die entfernte Speichervorrichtung (200) zur Speicherung und Entfernen der identifizierten gespeicherten Daten der mobilen Vorrichtung aus dem Speicherteilsystem (110) der mobilen Vorrichtung.

31. Die mobile Vorrichtung (100) gemäß Anspruch 30, wobei die Aktualisierungs-Verwaltungs- und Zuteilungs-Mittel weiter ausgebildet sind zum Senden einer Anforderung von der mobilen Vorrichtung (100) an die entfernte Speichervorrichtung (200) zum Senden der identifizierten gespeicherten Daten der mobilen Vorrichtung von der entfernten Speichervorrichtung (200) an die mobile Vorrichtung (100), Empfangen der identifizierten gespeicherten Daten der mobilen Vorrichtung von der entfernten Speichervorrichtung (200) in Reaktion auf die gesendete Anforderung, und Speichern der identifizierten gespeicherten Daten der mobilen Vorrichtung in dem Speicher (110) der mobilen Vorrichtung.

32. Das Verfahren gemäß Anspruch 1, das weiter aufweist, vor dem Erzeugen:
Senden von Daten, die in dem zweiten Bereich des Speichers der mobilen Vorrichtung gespeichert sind, an den Aktualisierungsserver zum temporären Speichern, um eine erforderliche Speichermenge in dem zweiten Bereich verfügbar zu machen zum Speichern der aktualisierten Konfiguration.

33. Das Verfahren gemäß Anspruch 32, wobei eine Datenbankdatei, die in der mobilen Vorrichtung gespeichert ist, als ein Ergebnis der Aktualisierung erneut zu indizieren ist, und das Verfahren weiter umfasst:
Weiterleiten der Datenbankdatei an den Aktualisierungsserver, damit die Datenbankdatei durch den Aktualisierungsserver erneut indiziert wird; und zurück-Empfangen der erneut indizierten Datenbankdatei von dem Aktualisierungsserver.

## Revendications

1. Procédé de mise à jour d'un dispositif mobile (100) ayant une configuration de ligne de base et un fichier de données original stocké dans une mémoire du dispositif mobile, consistant à :
recevoir (324) sur un dispositif mobile (100) des données d'exigences de ressources pour une mise à jour en provenance d'un dispositif informatique de gestion de mise à jour (200) ;
déterminer (326) si le dispositif mobile (100) comporte des ressources de mise à jour associées pour répondre aux exigences de ressources ;
allouer (328) des ressources de mise à jour au dispositif mobile (100) si le dispositif mobile (100) ne dispose pas de ressources de mise à jour associées pour répondre aux exigences de ressources ;
transmettre (332) du dispositif mobile (100) au dispositif informatique de gestion de mise à jour (200) des données de demande de mise à jour demandant des données de mise à jour (212) pour effectuer une mise à jour de la configuration de ligne de base qui est stockée dans une première zone de la mémoire du dispositif mobile ;
recevoir (338) sur le dispositif mobile (100) les données de mise à jour (212) en provenance du dispositif informatique de gestion de mise à jour (200) en réponse aux données de demande de mise à jour transmises ;
créer, avec les données de mise à jour reçues, une configuration mise à jour dans une seconde zone de la mémoire alors que la configuration de ligne de base reste inchangée dans la première zone de la mémoire et pouvant être sélectionnée pour une exécution depuis l'intérieur de la première zone de la mémoire, en donnant deux configurations pouvant être sélectionnées manuellement pour une exécution, la configuration de ligne de base originale étant stockée dans la première zone et la configuration mise à jour étant stockée dans la seconde zone ;
l'exécution temporaire du dispositif mobile (100) dans la configuration mise à jour consistant à recopier le fichier de données original qui est manipulé dans la seconde zone de la mémoire et à mettre à jour le fichier de données stocké dans la seconde zone de la mémoire tout en n'accédant pas au fichier de données original ;
recevoir une sélection de l'utilisateur indiquant si en tant que nouvelle configuration de ligne de base ;
si la sélection de l'utilisateur consiste à définir la configuration mise à jour en tant que nouvelle configuration de ligne de base, définir alors la configuration mise à jour en tant que nouvelle configuration de ligne de base en faisant référence à la position de la configuration mise à jour dans la seconde zone de la seconde mémoire du dispositif mobile en tant que nouvelle configuration de ligne de base au lieu du précédent emplacement de la configuration de ligne de base précédente ; et
si la sélection de l'utilisateur consiste à revenir à la configuration de ligne de base, désallouer alors les ressources mises à jour comprenant la seconde zone de la mémoire.

2. Procédé selon la revendication 1, dans lequel le fait de déterminer si le dispositif mobile (100) dispose de ressources de mise à jour associées pour répondre aux exigences de ressources consiste à déterminer (364) si le dispositif mobile (100) dispose d'une quantité minimum de mémoire disponible dans une mémoire (110) du dispositif mobile.

3. Procédé selon la revendication 2, dans lequel l'allocation de ressources de mise à jour au dispositif mobile (100) si le dispositif mobile (100) ne dispose pas de ressources de mise à jour associées pour répondre aux exigences de ressources consiste à : lors de la détermination du fait que le dispositif mobile (100) ne dispose pas de la quantité minimum de mémoire disponible, identifier (366) des données de dispositif mobile stockées dans la mémoire (110) du dispositif mobile qui peuvent être effacées pour rendre disponible la quantité minimum de mémoire disponible dans la mémoire (110) du dispositif mobile.

4. Procédé selon la revendication 3, dans lequel l'allocation de ressources de mise à jour au dispositif mobile (100) si le dispositif mobile (100) ne dispose pas de ressource de mise à jour associées pour répondre aux exigences de ressources, consiste en outre à :
lors de l'identification de données de dispositif mobile stockées dans la mémoire (100) du dispositif mobile qui peuvent être effacées pour rendre disponible la quantité minimum de mémoire disponible dans la mémoire (110) du dispositif mobile, déterminer (368) si les données de dispositif mobile stockées identifiées sont stockées sur un dispositif de stockage distant (200) ayant pour fonction de communiquer avec le dispositif mobile (100) par l'intermédiaire d'un réseau de communication (20) ;
lorsqu'il est déterminé que les données de dispositif mobile stockées identifiées ne sont pas stockées sur le dispositif de stockage distant, transmettre (370) les données de dispositif mobile stockées identifiées au dispositif de stockage distant (200) pour le stockage ; et
effacer (372) les données de dispositif mobile stockées identifiées de la mémoire (110) du dispositif mobile.

5. Procédé selon la revendication 4, consistant en outre à :
transmettre une demande du dispositif mobile (100) au dispositif de stockage distant (200) pour la transmission des données de dispositif mobile stockées identifiées du dispositif de stockage distant (200) au dispositif mobile (100) ;
recevoir les données de dispositif mobile stockées identifiées du dispositif de stockage distant (200) en réponse à la demande transmise ; et
stocker les données de dispositif mobile stockées identifiées dans la mémoire (110) du dispositif mobile.

6. Procédé selon la revendication 5, dans lequel le dispositif de stockage distant (200) comprend le dispositif informatique de gestion de mise à jour (200).

7. Procédé selon la revendication 1, dans lequel la mise à jour du dispositif mobile (100) avec les données de mise à jour reçues consiste en outre à :
stocker une ressource de mise à jour dans la mémoire (110) du dispositif mobile, la ressource de mise à jour spécifiant la configuration de dispositif mobile de ligne de ligne de base et la configuration de dispositif mobile mise à jour ;
déterminer (384) si une ressource de mise à jour est stockée dans la mémoire (110) du dispositif mobile pendant une initialisation du dispositif mobile (100) ;
lorsqu'il est déterminé que la ressource de mise à jour est stockée dans la mémoire (110) du dispositif mobile pendant une initialisation du dispositif mobile (100), inviter (390) un utilisateur du dispositif mobile à sélectionner l'une de la configuration de dispositif mobile de ligne de base ou de la configuration de dispositif mobile mise à jour ; et
accepter la configuration de dispositif mobile mise à jour ou revenir à la configuration de dispositif mobile de ligne de base sur la base de la sélection de l'utilisateur.

8. Procédé selon la revendication 1, dans lequel le fait de déterminer si le dispositif mobile (100) dispose de ressources de mise à jour associées pour répondre à des exigences de ressources consiste à déterminer si le dispositif mobile (100) dispose d'une quantité minimum de ressources de calcul pour exécuter des calculs de mise à jour sur des données de dispositif mobile stockées dans la mémoire (110) du dispositif mobile afin de créer des données de dispositif mobile mises à jour.

9. Procédé selon la revendication 8, dans lequel l'allocation de ressources de mise à jour au dispositif mobile (100) si le dispositif mobile (100) ne dispose pas de ressource de mise à jour associées pour répondre aux exigences de ressources consiste à :
lorsqu'il est déterminé que le dispositif mobile (100) ne dispose pas de la quantité minimum de ressources de calcul, identifier des données de dispositif mobile stockées dans la mémoire (110) du dispositif mobile pour lesquelles des calculs doivent être exécutés ; et
transmettre les données de dispositif mobile stockées identifiées au dispositif informatique de gestion de mise à jour (200) pour une exécution des calculs de mise à jour afin de créer les données de dispositif mobile mises à jour ; et effacer les données de dispositif mobile stockées identifiées de la mémoire (110) du dispositif mobile.

10. Procédé selon la revendication 9, consistant en outre à :
transmettre une demande du dispositif mobile (100) au dispositif informatique de gestion de mise à jour pour transmettre les données de dispositif mobile mises à jour du dispositif informatique de gestion de mise à jour (200) au dispositif mobile (100) ;
recevoir les données de dispositif mobile mises à jour en provenance du dispositif informatique de gestion de mise à jour (200) en réponse à la demande transmise ; et
stocker les données de dispositif mobile stockées mises à jour dans la mémoire (110) du dispositif mobile.

11. Procédé selon la revendication 1, dans lequel la mise à jour du dispositif mobile (100) avec les données de mise à jour reçues (212) consiste en outre à effectuer une copie sur écriture des données de configuration de ligne de base stockées dans la mémoire disponible du dispositif mobile (100), dans lequel la technique de copie sur écriture consiste à ne copier que des données qui sont mises à jour lorsque les données sont mises à jour et à conserver des références aux données inchangées.

12. Procédé selon l'une quelconque des revendications précédentes, consistant à :
transmettre (322) d'un dispositif informatique de gestion de mise à jour (200) à un dispositif mobile (100) des données d'exigences de ressources pour une mise à jour ;
recevoir (334) sur le dispositif informatique de gestion de mise à jour (200) une demande de mise à jour transmise par le dispositif mobile (100) en réponse aux données d'exigences de ressources transmises ; et
transmettre (336) du dispositif informatique de gestion de mise à jour (200) au dispositif mobile (100) les données de mise à jour en réponse à la demande de mise à jour.

13. Procédé selon la revendication 12, consistant en outre à :
recevoir des données de dispositif mobile stockées transmises par le dispositif mobile (100) ;
stocker des données de dispositif mobile stockées dans le dispositif informatique de gestion de mise à jour (200) ;
recevoir une demande de données de dispositif mobile stockées transmise par le dispositif mobile (100) ; et
transmettre (336) du dispositif informatique de gestion de mise à jour (200) au dispositif mobile (100) les données de dispositif mobile stockées.

14. Procédé selon la revendication 12, consistant en outre à :
recevoir des données de dispositif mobile stockées transmises par le dispositif mobile (100) ;
stocker les données de dispositif mobile stockées dans le dispositif informatique de gestion de mise à jour (200) ; et
exécuter les calculs de mise à jour pour créer des données de dispositif mobile mises à jour dans le dispositif informatique de gestion de mise à jour (200).

15. Procédé selon la revendication 14, consistant en outre à :
recevoir une demande de données de dispositif mobile mises à jour transmises par le dispositif mobile (100) ; et
transmettre du dispositif informatique de gestion de mise à jour (200) au dispositif mobile (100) les données de dispositif mobile mises à jour.

16. Procédé selon la revendication 14, consistant en outre à :
recevoir une demande de données de dispositif mobile stockées transmise par le dispositif mobile (100) ; et
transmettre du dispositif informatique de gestion de mise à jour (200) au dispositif mobile (100) les données de dispositif mobile stockées.

17. Code de programme exécutable stocké sur un support lisible par ordinateur et comprenant des instructions pouvant être exécutées pour faire en sorte que le dispositif informatique mette en oeuvre le procédé selon l'une quelconque des revendications 1 à 16 lorsqu'elles sont exécutées sur le dispositif informatique.

18. Dispositif de communication mobile (100) comprenant :
un sous-système de traitement (120), un sous-système de mémoire (110), et
un sous-système de communication (130), le sous-système de traitement (120) étant relié au sous-système de mémoire (110) et au sous-système de communication (130) et ayant pour fonction de stocker et d'extraire des données dans le sous-système de mémoire (110), d'exécuter des instructions stockées dans le sous-système de mémoire (110), et de faire en sorte que le sous-système de communication (130) transmette et reçoive des données par l'intermédiaire du réseau de communication (20) ; et
des moyens de gestion d'allocation de mise à jour de dispositif mobile conçus pour :
stocker, dans une première zone de la mémoire du dispositif mobile, une configuration de dispositif mobile de ligne de base et un fichier de données original,
faire en sorte que le sous-système de traitement (120) reçoive des données d'exigences de ressources pour une mise à jour transmise par l'intermédiaire d'un réseau de communication (20),
déterminer si le dispositif mobile (100) dispose de ressources de mise à jour associées pour répondre aux exigences de ressources,
allouer des ressources de mise à jour dans le dispositif mobile (100) si le dispositif mobile (100) ne dispose pas de ressources de mise à jour associées pour répondre aux exigences de ressources,
transmettre par l'intermédiaire du réseau de communication (20) des données de demande de mise à jour demandant des données de mise à jour (200) à un dispositif informatique de gestion de mise à jour,
recevoir, en provenance du dispositif informatique de gestion de mise à jour, les données de mise à jour pour effectuer une mise à jour de la configuration de ligne de base afin de créer une configuration mise à jour, et
créer, avec les données de mise à jour reçues, une configuration mise à jour dans une seconde zone de la mémoire alors que la configuration de ligne de base reste inchangée dans la première zone de la mémoire et pouvant être sélectionnée pour une exécution depuis l'intérieur de la première zone de la mémoire, en donnant deux configurations pouvant être sélectionnées manuellement pour une exécution, la configuration de ligne de base originale étant stockée dans la première zone et la configuration mise à jour étant stockée dans la seconde zone,
dans lequel le dispositif mobile (100) est temporairement exécuté dans la configuration mise à jour, cela consistant à recopier le fichier de données original qui est manipulé dans la seconde zone de la mémoire et à mettre à jour le fichier de données stocké dans la seconde zone de la mémoire tout en n'accédant pas au fichier de données original,
dans lequel le dispositif mobile (100) est conçu pour :
recevoir une sélection de l'utilisateur indiquant si oui ou non la configuration mise à jour doit être définie en tant que nouvelle configuration de ligne de base ;
si la sélection de l'utilisateur consiste à définir la configuration mise à jour en tant que nouvelle configuration de ligne de base, à définir alors la configuration mise à jour en tant que nouvelle configuration de ligne de base en faisant référence à l'emplacement de la configuration mise à jour dans la seconde zone de la seconde mémoire du dispositif mobile en tant que nouvelle configuration de ligne de base au lieu du précédent emplacement de la configuration de ligne de base précédente, et
si la sélection de l'utilisateur consiste à revenir à la configuration de ligne de base, désallouer alors les ressources de mise à jour comprenant la seconde zone de mémoire.

19. Dispositif mobile (100) selon la revendication 18, dans lequel les moyens de gestion et d'allocation de mise à jour de dispositif mobile sont en outre conçus pour faire en sorte que le sous-système de traitement détermine si le dispositif mobile (100) dispose d'une quantité minimum de mémoire disponible dans le sous-système de mémoire de dispositif mobile (110) et, lorsqu'il est déterminé que le dispositif mobile (100) ne dispose pas de la quantité minimum de mémoire disponible, identifier des données de dispositif mobile stockées dans le sous-système de mémoire (110) qui peuvent être effacées pour rendre disponible la quantité minimum de mémoire disponible.

20. Dispositif mobile (100) selon la revendication 19, dans lequel les moyens de gestion et d'allocation de mise à jour de dispositif mobile sont en outre conçus pour faire en sorte que le sous-système de traitement (120) détermine si les données de dispositif mobile stockées identifiées sont stockées sur un dispositif de stockage distant (200) ayant pour fonction de communiquer avec le dispositif mobile (100) par l'intermédiaire d'un réseau de communication (20) et, lorsqu'il est déterminé que les données de dispositif mobile stockées identifiées ne sont pas stockées sur le dispositif de stockage distant (200), transmettre les données de dispositif mobile stockées identifiées au dispositif de stockage distant (200) pour le stockage et effacer les données de dispositif mobile stockées identifiées de la mémoire (110) du dispositif mobile après la transmission.

21. Dispositif mobile (100) selon la revendication 20, dans lequel les moyens de gestion et d'allocation de mise à jour de dispositif mobile sont en outre conçus pour transmettre au dispositif de stockage distant (200) une demande de transmission des données de dispositif mobile stockées identifiées du dispositif de stockage distant (200) au dispositif mobile (100), recevoir des données de dispositif mobile stockées identifiées en provenance du dispositif de stockage distant (200) en réponse à la demande transmise, et stocker les données de dispositif mobile stockées identifiées dans le sous-système de mémoire (110) du dispositif mobile.

22. Dispositif mobile (100) selon la revendication 18, dans lequel les moyens de gestion et d'allocation de mise à jour de dispositif mobile sont en outre conçus pour faire en sorte que le sous-système de traitement (120) détermine si le dispositif mobile (100) dispose d'une quantité minimum de ressources de calcul pour exécuter des calculs de mise à jour sur des données de dispositif mobile stockées dans le sous-système de mémoire (110) du dispositif mobile afin de créer des données de dispositif mobile mises à jour et, lorsqu'il est déterminé que le dispositif mobile (100) ne dispose pas de la quantité minimum de ressources de calcul, identifier des données de dispositif mobile stockées dans le sous-système de mémoire (110) du disponible mobile pour lequel des calculs de mise à jour doivent être exécutés, et transmettre les données de dispositif mobile stockées identifiées au dispositif informatique de gestion de mise à jour (200) pour l'exécution des calculs de mise à jour afin de créer les données de dispositif mobile mises à jour.

23. Dispositif mobile (100) selon la revendication 22, dans lequel les moyens de gestion et d'allocation de mise à jour de dispositif mobile sont en outre conçus pour transmettre au dispositif informatique de gestion de mise à jour (200) une demande de transmission des données de dispositif mobile mises à jour du dispositif informatique de gestion de mise à jour (200) au dispositif mobile (100), recevoir les données de dispositif mobile mises à jour (100) en provenance du dispositif informatique de gestion de mise à jour (200) en réponse à la demande transmise, et stocker les données de dispositif mobile mises à jour dans le sous-système de mémoire de dispositif mobile (110).

24. Dispositif mobile (100) selon la revendication 18, dans lequel les moyens de gestion et d'allocation de mise à jour de dispositif mobile sont en outre conçus pour faire en sorte que le sous-système de traitement (120) stocke une ressource de mise à jour dans le sous-système de mémoire (110) du dispositif mobile, la ressource de mise à jour spécifiant la configuration de dispositif mobile de ligne de base et la configuration de dispositif mobile mise à jour, déterminer si une ressource de mise à jour est stockée dans la mémoire (110) du dispositif mobile pendant une initialisation du dispositif mobile (100), lorsqu'il est déterminé que la ressource de mise à jour est stockée dans le sous-système de mémoire (110) du dispositif mobile, pendant une initialisation du dispositif mobile (100), inviter un utilisateur du dispositif mobile à sélectionner l'une de la configuration de dispositif mobile de ligne de base ou de la configuration de dispositif mobile mise à jour, et accepter la configuration de dispositif mobile mise à jour ou revenir à la configuration de dispositif mobile de ligne de base sur la base de la sélection de l'utilisateur.

25. Dispositif mobile (100) selon l'une quelconque des revendications 18 à 24, comprenant en outre :
un serveur de gestion de mise à jour (200) comprenant un sous-système de traitement (220), un sous-système de mémoire (210) et un sous-système de communication (230), le sous-système de traitement (220) étant relié au sous-système de mémoire (210) et au sous-système de communication (230) et ayant pour fonction de stocker et d'extraire des données dans le sous-système de mémoire (210), d'exécuter des instructions stockées dans le sous-système de mémoire (210) et de faire en sorte que le sous-système de communication (230) transmette et reçoive des données par l'intermédiaire du réseau de communication (20) ; et
des moyens de gestion et d'allocation de serveur de mise à jour conçus pour faire en sorte que le sous-système de traitement (220) transmette des données d'exigences de ressources pour une mise à jour à un dispositif mobile (100) par l'intermédiaire du réseau de communication (20), reçoive des données de demande de mise à jour transmises par un dispositif mobile (100) par l'intermédiaire du réseau de communication (20) en réponse aux données d'exigences de ressources transmises, et transmette en retour des données de mise à jour (212) à un dispositif mobile (100) par l'intermédiaire du réseau de communication (20) en réponse aux données de demande de mise à jour.

26. Dispositif mobile (100) selon la revendication 25, dans lequel les moyens de gestion et d'allocation de serveur de mise à jour sont en outre conçus pour faire en sorte que le sous-système de traitement (220) reçoive des données de dispositif mobile stockées transmises par un dispositif mobile (100), stocke les données de dispositif mobile stockées dans le sous-système de mémoire (210), reçoive une demande de données de dispositif mobile stockées transmises par un dispositif mobile (100) et transmette à un dispositif mobile (100) les données de dispositif mobile stockées.

27. Dispositif mobile (100) selon la revendication 26, dans lequel les moyens de gestion et d'allocation de serveur de mise à jour sont en outre conçus pour faire en sorte que le sous-système de traitement (220) reçoive des données de dispositif mobile stockées transmises par un dispositif mobile (100), stocke les données de dispositif mobile stockées dans le sous-système de mémoire (210), et exécute des calculs de mise à jour afin de créer des données de dispositif mobile mises à jour.

28. Dispositif mobile (100) selon la revendication 27, dans lequel les moyens de gestion et d'allocation de serveur de mise à jour sont en outre conçus pour faire en sorte que le sous-système de traitement (220) reçoive une demande de données de dispositif mobile mises à jour transmises par un dispositif mobile (100) et transmette les données de dispositif mobile mises à jour à un dispositif mobile (100).

29. Dispositif mobile (100) selon la revendication 26, dans lequel les moyens de gestion et d'allocation de serveur de mise à jour sont en outre conçus pour faire en sorte que le sous-système de traitement (220) reçoive une demande de données de dispositif mobile stockées d'un dispositif mobile (100) et transmette les données de dispositif mobile stockées à un dispositif mobile (100).

30. Dispositif mobile (100) selon la revendication 18, dans lequel les moyens de gestion et d'allocation de mise à jour sont en outre conçus pour faire en sorte que le dispositif mobile (100) identifie des données de dispositif mobile stockées dans la mémoire (110) du dispositif mobile, qui peut être effacée pour rendre disponibles des ressources de mémoire, déterminer si les données de dispositif mobile stockées identifiées sont stockées sur un dispositif de stockage distant (200) ayant pour fonction de communiquer avec le dispositif mobile (100) par l'intermédiaire du réseau de communication (20) et, lorsqu'il est déterminé que les données de dispositif mobile stockées identifiées ne sont pas stockées sur le dispositif de stockage distant (200), transmettre les données de dispositif mobile stockées identifiées au dispositif de stockage distant (200) pour le stockage et effacer les données de dispositif mobile stockées identifiées du sous-système de (110) du dispositif mobile.

31. Dispositif mobile (100) selon la revendication 30, dans lequel les moyens de gestion et d'allocation de mise à jour sont en outre aptes à transmettre une demande du dispositif mobile (100) au dispositif de stockage distant (200) pour la transmission des données de dispositif mobile stockées identifiées du dispositif de stockage distant (200) au dispositif mobile (100), recevoir les données de dispositif mobile stockées identifiées en provenance du dispositif de stockage distant (200) en réponse à la demande transmise, et stocker les données de dispositif mobile stockées identifiées dans la mémoire (110) du dispositif mobile.

32. Procédé selon la revendication 1, consistant en outre, avant ladite création, à :
transmettre au serveur de mise à jour des données qui sont stockées dans la seconde zone de la mémoire du dispositif mobile, pour un stockage temporaire, afin de rendre disponible une quantité requise de mémoire dans la seconde zone pour stocker la configuration mise à jour.

33. Procédé selon la revendication 32, dans lequel un fichier de base de données stocké sur le dispositif mobile doit être réindexé comme résultat de la mise à jour, et le procédé consiste en outre à :
réacheminer le fichier de base de données au serveur de mise à jour pour que le fichier de base de données soit réindexé par le serveur de mise à jour ; et
recevoir en retour le fichier de base de données réindexé du serveur de mise à jour.
